# EUROPEAN PATENT APPLICATION

(11) **EP 4 694 067 A1**
(43) Date of publication of application: **11.02.2026**
(21) Application number: 23931580.7
(22) Date of filing: 07.04.2023
(51) Int. Cl.: H04L 41/50, H04W 36/14

(54) **NETWORK SELECTION METHOD AND APPARATUS**

(71) Applicant: Beijing Xiaomi Mobile Software Co., Ltd., Beijing 100085 (CN)
(72) Inventor: LIU, Jianning, Beijing 100085 (CN)
(74) Representative: Dehns Germany Partnerschaft mbB
(86) International application number: PCT/CN2023/087132
(87) International publication number: WO 2024/207520

(57) **Abstract**

The embodiments of the present disclosure can be applied to the technical field of communications. Disclosed are a network selection method and apparatus. The method, which is executed by a terminal device, comprises: acquiring network information of at least one optional SNPN; and according to the network information of the optional SNPN and selection strategy information, determining a target SNPN selected for registration. Thus, a terminal device can synchronously take a validity condition into consideration during a network selection process, such that the network selection efficiency can be improved.

## Description

### TECHNICAL FIELD

The present disclosure relates to the communication technical field, and in particular to a network selection method and apparatus.

### BACKGROUND

The Non-Public Network (NPN) is a non-public fifth-generation (the 5th generation system, 5GS) communication network, which is used to provide network services to specific users. The NPN may be implemented with or without the support of a Public Land Mobile Network (PLMN). An NPN that is implemented without the support of the PLMN is called a standalone deployed NPN (Standalone NPN, SNPN) (may also be simply called as a private network, or a proprietary network, or a non-public network).

### SUMMARY

Embodiments of the present disclosure provide a network selection method and apparatus, in which a terminal device can simultaneously consider a validity condition during a network selection procedure, thereby improving network selection efficiency.

In a first aspect, an embodiment of the present disclosure provides a network selection method. The method is performed by a terminal device. The method includes: obtaining network information of at least one optional Standalone Non-Public Network (SNPN); and according to the network information of the optional SNPN and selection policy information, determining a target SNPN which is selected for registration;
the selection policy information includes at least one of the following:
a first list, where the first list includes network identifiers of user controlled first candidate SNPNs, first priority information and first validity conditions corresponding to the network identifiers of the first candidate SNPNs;
a second list, where the second list includes network identifiers of credentials holder controlled second candidate SNPNs, second priority information and second validity conditions corresponding to the network identifiers of the second SNPNs;
a third list, where the third list includes credentials holder controlled candidate group identities GINs, third priority information and third validity conditions corresponding to the candidate GINs.

In this technical solution, a terminal device obtains network information of at least one optional SNPN, and determines a target SNPN which is selected for registration according to the network information of the optional SNPN and selection policy information. The selection policy information includes at least one of a first list, a second list, and a third list. Thus, the terminal device can simultaneously consider a validity condition during network selection, thereby improving network selection efficiency.

In a second aspect, an embodiment of the present disclosure provides another network selection method. The method is performed by an access network device. The method includes: sending indication information to a terminal device, where the indication information is used to indicate network information of at least one optional SNPN, and the indication information is used for the terminal device to obtain network information of the at least one optional SNPN.

In a third aspect, an embodiment of the present disclosure provides a communication apparatus that has a part or all of the functions of the terminal device for implementing the method described in the first aspect above. For example, the functions of the communication apparatus may include a part or all of the functions in the embodiments of the present disclosure, or may include the functions of implementing any one of the embodiments of the present disclosure separately. The functions may be implemented by hardware or by hardware executing corresponding software. The hardware or software includes one or more units or modules corresponding to the above functions.

In an implementation, the structure of the communication apparatus may include a transceiving module and a processing module. The processing module is configured to support the communication apparatus in performing corresponding functions of the above-mentioned methods. The transceiving module is configured to support communication between the communication apparatus and other devices. The communication apparatus may also include a storage module, which is coupled to the transceiving module and the processing module and stores computer programs and data necessary for the communication apparatus.

In an implementation, the communication apparatus includes: a processing module configured to obtain network information of at least one optional SNPN; the processing module is further configured to determine a target SNPN which is selected for registration according to the network information of the optional SNPN and selection policy information;
the selection policy information includes at least one of the following:
a first list, where the first list includes network identifiers of user controlled first candidate SNPNs, first priority information and first validity conditions corresponding to the network identifiers of the first candidate SNPNs;
a second list, where the second list includes network identifiers of credentials holder controlled second candidate SNPNs, second priority information and second validity conditions corresponding to the network identifiers of the second SNPNs;
a third list, where the third list includes credentials holder controlled candidate group identities GINs, third priority information and third validity conditions corresponding to the candidate GINs.

In a fourth aspect, an embodiment of the present disclosure provides another communication apparatus that has a part or all of the functions of the access network device for implementing the example method described in the second aspect above. For example, the functions of the communication apparatus may include a part or all of the functions in the embodiments of the present disclosure, or may include the functions of implementing any one of the embodiments of the present disclosure separately. The functions may be implemented by hardware or by hardware executing corresponding software. The hardware or software includes one or more units or modules corresponding to the above functions.

In an implementation, the communication apparatus may include a transceiving module and a processing module. The processing module is configured to support the communication apparatus in performing corresponding functions of the above-described method. The transceiving module is configured to support communication between the communication apparatus and other devices. The communication apparatus may also include a storage module, which is coupled to the transceiving module and the processing module and stores computer programs and data necessary for the communication apparatus.

In an implementation, the communication apparatus includes: a transceiving module configured to send indication information to a terminal device, wherein the indication information is used to indicate network information of at least one optional SNPN, and the indication information is used for the terminal device to obtain network information of the at least one optional SNPN.

In a fifth aspect, an embodiment of the present disclosure provides a communication apparatus, which includes a processor. When the processor invokes a computer program in a memory, the method described in the first aspect is implemented.

In a sixth aspect, an embodiment of the present disclosure provides a communication apparatus, which includes a processor. When the processor invokes a computer program in a memory, the method described in the second aspect is implemented.

In a seventh aspect, an embodiment of the present disclosure provides a communication apparatus, which includes a processor and a memory. A computer program is stored in the memory. The processor executes the computer program stored in the memory, to cause the communication apparatus to perform the method described in the first aspect above.

In an eighth aspect, an embodiment of the present disclosure provides a communication apparatus, which includes a processor and a memory. A computer program is stored in the memory. The processor executes the computer program stored in the memory, to cause the communication apparatus to perform the method described in the second aspect above.

In a ninth aspect, an embodiment of the present disclosure provides a communication apparatus, which includes a processor and an interface circuit. The interface circuit is configured to receive code instructions and transmit the code instructions to the processor, and the processor is configured to run the code instructions to cause the apparatus to perform the method described in the first aspect above.

In a tenth aspect, an embodiment of the present disclosure provides a communication apparatus, which includes a processor and an interface circuit. The interface circuit is configured to receive code instructions and transmit the code instructions to the processor, and the processor is configured to run the code instructions to cause the apparatus to perform the method described in the second aspect above.

In an eleventh aspect, an embodiment of the present disclosure provides a network selection system, which includes the communication apparatus described in the third aspect and the communication apparatus described in the fourth aspect, or the system includes the communication apparatus described in the fifth aspect and the communication apparatus described in the sixth aspect, or the system includes the communication apparatus described in the seventh aspect and the communication apparatus described in the eighth aspect, or the system includes the communication apparatus described in the ninth aspect and the communication apparatus described in the tenth aspect.

In a twelfth aspect, an embodiment of the present invention provides a computer-readable storage medium for storing instructions used by the above-mentioned terminal device. When the instructions are executed, the terminal device is caused to perform the method described in the first aspect above.

In a thirteenth aspect, an embodiment of the present invention provides a readable storage medium for storing instructions used by above-mentioned access network device. When the instructions are executed, the access network device is caused to perform the method described in the second aspect above.

In a fourteenth aspect, the present disclosure further provides a computer program product including a computer program. When the computer program is run on a computer, the computer is caused to perform the method described in the first aspect above.

In a fifteenth aspect, the present disclosure further provides a computer program product including a computer program. When the computer program is run on a computer, the computer is caused to perform the method described in the second aspect above.

In a sixteenth aspect, the present disclosure provides a chip system including at least one processor and an interface for supporting a terminal device in implementing the functions involved in the first aspect, such as determining or processing at least one of the data and information involved in the aforementioned methods. In a possible design, the chip system further includes a memory for storing computer programs and data necessary for the terminal device. The chip system may be formed by a chip, or may include a chip and other discrete component(s).

In a seventeenth aspect, the present disclosure provides a chip system including at least one processor and an interface for supporting an access network device in implementing the functions involved in the second aspect, such as determining or processing at least one of data and information involved in the aforementioned methods. In a possible design, the chip system further includes a memory for storing computer programs and data necessary for the access network device. The chip system may be formed by a chip, or may include a chip and other discrete component(s).

In an eighteenth aspect, the present disclosure provides a computer program. When the computer program is run on a computer, the computer is caused to perform the method described in the first aspect above.

In a nineteenth aspect, the present disclosure provides a computer program. When the computer program is run on a computer, the computer is caused to perform the method described in the second aspect above.

### BRIEF DESCRIPTION OF THE DRAWINGS

In order to more clearly illustrate the technical solutions in the embodiments of the present disclosure or the background technology, the drawings required for use in the embodiments of the present disclosure or the background technology will be described below.
FIG. 1 is an architecture diagram of a communication system provided by an embodiment of the present disclosure;
FIG. 2 is an architecture diagram of another communication system provided by an embodiment of the present disclosure;
FIG. 3 is a schematic diagram of a consortium provided by an embodiment of the present disclosure;
FIG. 4 is a flowchart of a network selection method provided by an embodiment of the present disclosure;
FIG. 5 is a flowchart of another network selection method provided by an embodiment of the present disclosure;
FIG. 6 is a structural diagram of a communication apparatus provided by an embodiment of the present disclosure;
FIG. 7 is a structural diagram of another communication apparatus provided by an embodiment of the present disclosure;
FIG. 8 is a schematic structural diagram of a chip provided by an embodiment of the present disclosure.

### DETAILED DESCRIPTION

In order to better understand the network selection method and apparatus disclosed in the embodiments of the present disclosure, a communication system to which the embodiments of the present disclosure are applicable is first described below.

The embodiments of the present disclosure are described in detail below, and examples of the embodiments are shown in the accompanying drawings. The same or similar reference numerals throughout represent the same or similar elements or elements having the same or similar functions. The embodiments described below with reference to the accompanying drawings are illustrative and are intended to be used to explain the present disclosure, and are not to be construed as limitations on the present disclosure. In the description of the present disclosure, unless otherwise specified, "/" means "or". For example, A/B can mean A or B. The expression "and/or" herein is merely a description of an association relationship of associated objects, indicating that three relationships can exist. For example, A and/or B can mean: A exists alone, A and B exist at the same time, and B exists alone.

The technical solutions of the embodiments of the present disclosure may be applied to various communication systems, such as: a Long Term Evolution (LTE) system, a LTE Frequency Division Duplex (FDD) system, a LTE Time Division Duplex (TDD) system, a fifth generation (5th generation, 5G) mobile communication system or a New Radio (NR) system, or the embodiments of the present disclosure may be applied to a future communication system or other similar communication system(s), etc.

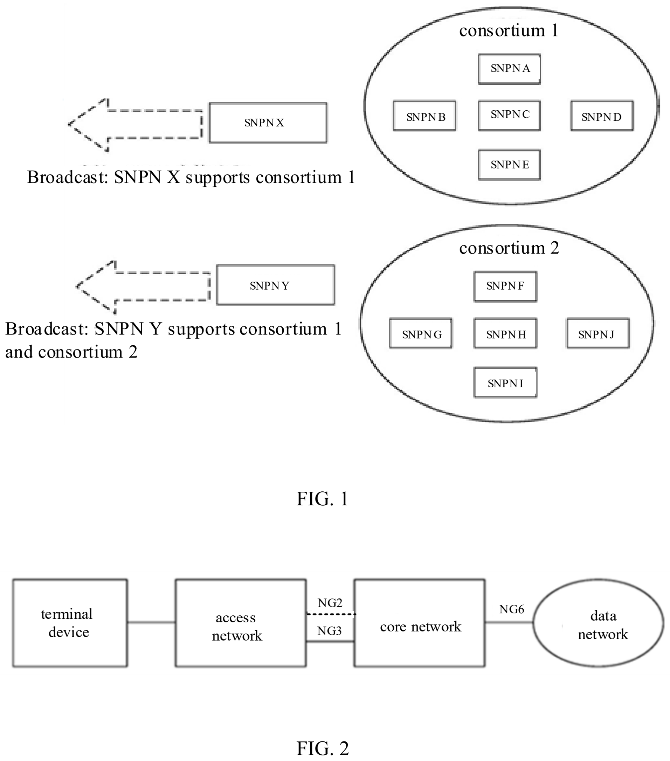

FIG. 1 is a schematic diagram of the network architecture of a communication system which the present disclosure is applicable to. According to requirements of a 3rd Generation Partnership Project (3GPP) protocol standard, the network architecture includes four constituting parts: a terminal device (User equipment, UE), an Access Network (AN) device, a core network (core), and a Data Network (DN). The access network device may be a Radio Access Network (RAN) device.

The terminal device, the (radio) access network device, and the core network are the main constituting parts of the above network architecture. Logically, they may be divided into two parts: a user plane and a control plane. The control plane is responsible for management of the mobile network, and the user plane is responsible for transmission of service data. For example, as shown in FIG. 1, in a 5G communication system, the next generation (NG) 2 reference point is located between the (radio) access network device control plane and the core network control plane, the NG3 reference point is located between the (radio) access network device user plane and the core network user plane, and the NG6 reference point is located between the core network user plane and the data network.

The following is a detailed introduction to various constituting parts of the above network architecture.
1. The terminal device is a device with wireless transceiving functions. The terminal device is the entrance for a mobile user to interact with the network. The terminal device can provide basic computing capabilities and storage capabilities, display a service window to the user, and accept operation input(s) from the user. The terminal device may communicate with the core network or the data network via the (radio) access network device and exchange voice and/or data with the (radio) access network device. For example, in a 5G communication system, the next generation terminal device (NextGen UE, NG UE) may use the New Radio (NR) technology to establish a signal connection and a data connection with the (radio) access network device, thereby transmitting control signals and service data to the network.

As an example, the terminal device may include a wireless terminal device, a mobile terminal device, a Device-to-Device (D2D) terminal device, a vehicle-to-everything (V2X) terminal device, a machine-to-machine/machine-type communications (M2M/MTC) terminal device, an Internet of Things (IoT) terminal device, a subscriber unit, a subscriber station, a mobile station, a remote station, an Access Point (AP), a remote terminal, an access terminal, a user terminal, a user agent, or a user device, etc. For example, the terminal device may be a mobile phone, a pad, a computer with wireless transceiving function, a portable, pocket-sized, handheld or computer-built-in mobile device, etc. For another example, the terminal device may be a Virtual Reality (VR) terminal device, an Augmented Reality (AR) terminal device, a wireless terminal in industrial control, a wireless terminal in self-driving, a wireless terminal in remote medical surgery, a wireless terminal in a smart grid, a wireless terminal in transportation safety, a wireless terminal in a smart city, a wireless terminal in a smart home, a terminal device in a future Public Land Mobile Network (PLMN), or a vehicle device in V2X, Customer Premises Equipment (CPE), etc. For another example, the terminal device may be a Personal Communication Service (PCS) phone, a cordless phone, a Session Initiation Protocol (SIP) phone, a Wireless Local Loop (WLL) station, a Personal Digital Assistant (PDA), etc.

By way of example but not limitation, the terminal device may also be a wearable device. A wearable device, also known as wearable smart device or smart wearable device, is a general term for wearable devices developed by applying a wearable technology to intelligently design everyday wearable things, such as glasses, gloves, watch, clothing, and shoes, etc. The wearable device is a portable device that is worn directly on the body or integrated into a user's clothing or accessories. The wearable device is not merely a hardware device; the wearable device can achieve powerful functions through software support, data interaction, and cloud interaction. Broadly speaking, wearable smart device include devices that are fully functional, large in size and can implement complete or partial functions independently of a smartphone, such as smart watch or smart glasses, etc., as well as devices that focus on a specific application function and require integration with other devices such as a smartphone, for example, various smart bracelets for vital sign monitoring, smart helmets, or smart jewelry, etc. The various terminal devices described above, if located on a vehicle (e.g., placed inside or installed in a vehicle), can be considered as vehicle-mounted terminal devices. A vehicle-mounted terminal device may also be called as an On-Board Unit (OBU).

The terminal device may be deployed on land, including indoors or outdoors, handheld, wearable, or vehicle-mounted. The terminal device may also be deployed on water (such as ships, etc.). The terminal device may also be deployed in the air (such as aircraft, balloons, and satellites, etc.). The embodiments of the present disclosure do not limit the specific technology, device form, application scenario, or name used by the terminal device.

2. The (radio) access network device is deployed near terminal devices, provides network access functions for authorized users in a specific area and determines transmission tunnels of varying quality to transmit user data based on user level or service requirements, etc. The (radio) access network device can manage and rationally utilize its own resources, provide access services to terminal devices on demand and are responsible for forwarding control signals and service data between terminal devices and the core network.

A (radio) access network device is deployed in the (radio) access network device to connect terminal devices to the radio network. The (radio) access network device is generally connected to the core network via a wired link (e.g., fiber optic cable). The (radio) access network device is also called an RAN device/node or a base station.

As an example, the (radio) access network device may include a base station, an evolved base station (evolved NodeB, eNodeB) in an LTE system or an evolved LTE system (LTE-Advanced, LTE-A), a next generation base station (next generation NodeB, gNB) in a 5G communication system, a Transmission Reception Point (TRP), a baseband unit (BBU), an Access Point (AP) in a Wireless Local Area Network (WLAN), an Integrated Access and Backhaul (IAB) node, a base station in a future mobile communication system, or an access node in a WiFi system, etc. The radio access network device may also be a module or unit that performs a part of the functions of a base station, such as a Central Unit (CU) or a Distributed Unit (DU).

For example, in a network structure, a (radio) access network device may be a CU node, or a DU node, or a (radio) access network device including a CU node and a DU node. The CU node is used to support protocols such as Radio Resource Control (RRC), Packet Data Convergence Protocol (PDCP), Service Data Adaptation Protocol (SDAP), etc. The DU node is used to support the Radio Link Control (RLC) layer protocol, the Medium Access Control (MAC) layer protocol, and the physical layer protocol.

The (radio) access network device may be deployed on land, including indoors or outdoors, handheld, wearable, or vehicle-mounted; the (radio) access network device may also be deployed on the water (such as ships, etc.); (radio) access network device may also be deployed in the air (such as airplanes, balloons, and satellites, etc.). The embodiments of the present disclosure do not limit the specific technology, device form, application scenarios, and name adopted by the (radio) access network device. In the embodiments of the present disclosure, the (radio) access network device may be simply referred to as an access network (AN) device. Unless otherwise specified, the access network device mentioned below may all be a (radio) access network device.

3. The core network is responsible for maintaining subscription data of the mobile network, managing network elements of the mobile network, and providing terminal devices with functions such as session management, mobility management, policy management, security authentication, etc. The functions may include specifically the following functions. When a terminal device performs attachment, the core network provides network access authentication for the terminal device. When a terminal device has a service request, the core network allocates network resources for the terminal device. When a terminal device moves, the core network updates network resources for the terminal device. When a terminal device is idle, the core network provides a fast recovery mechanism for the terminal device. When a terminal device performs detachment, the core network releases network resources for the terminal device. When a terminal device has service data, the core network provides data routing functions for the terminal device, such as forwarding uplink data to the data network, or receiving downlink data from the data network and forwarding it to the (radio) access network device so as to send the data to the terminal device.

4. The data network is used to provide business services to users. In actual communication, a client end is typically located on a terminal device, while a server end is typically located on a data network. The data network may be a private network, such as a Local Area Network (LAN), or may be an external network not controlled by an operator, such as the Internet, or may be a proprietary network jointly deployed by operators, such as a network that provides IP multimedia network subsystem (IP multimedia core network subsystem, IMS) services.

FIG. 2 illustrates a more specific network architecture which embodiments of the present disclosure are applicable to. The network architecture may be a 5G communication system architecture. As shown in FIG. 2, the network architecture includes a terminal device, an access network device, various types of core network elements/functional entities, and a data network.

The core network user plane includes a User Plane Function (UPF). The core network control plane includes but is not limited to: an Access and Mobility Management Function (AMF), a Session Management Function (SMF), an Authentication Server Function (AUSF), a Network Slice Selection Function (NSSF), a Network Exposure Function (NEF), a Network function Repository Function (NRF), a Policy Control Function (PCF), Unified Data Management (UDM), An Application Function (AF).

The AMF is mainly responsible for the access management and mobility management of terminal devices. For example, the AMF is responsible for status maintenance of terminal devices, reachability management of terminal devices, forwarding of Mobility Management Non-Access-Stratum (MM NAS) messages, or forwarding of Session Management (SM) N2 messages.

The SMF is mainly responsible for session management in a mobile network, including establishing sessions for terminal devices and allocating and releasing resources for sessions. The resources include Quality of Service (QoS) of session, session paths, or forwarding rules, etc. For example, the SMF allocates Internet Protocol (IP) addresses to terminal devices and selects a UPF that provides a packet forwarding function.

The UPF is mainly responsible for connecting to an external network and forwarding user data packets according to routing rules of the SMF, for example, sending uplink data to the data network or other UPF(s), or sending downlink data to other UPF(s) or the access network device.

The AUSF is mainly responsible for performing security authentication of terminal devices.

The NSSF is mainly responsible for selecting appropriate network slices for terminal services.

The NEF exposes a part of functions of the network to application(s) in a controlled manner.

The NRF is mainly responsible for providing storage and selection functions for network function entity information for other network element(s).

The PCF is mainly responsible for user policy management, including generation of policy authorization, service quality and charging rules, and the PCF sends corresponding rules to a UPF through the SMF to complete installation of corresponding policies and rules.

The UDM is mainly responsible for managing user data, including subscription information, context, policy information, etc. It should be noted that although not shown in FIG. 2, the network architecture shown in FIG. 2 may also include a Unified Data Repository (UDR), and the functions of UDM may be implemented through interaction with the UDR. The UDR is used to store data required for the UDM to perform its operations, and the UDM is used to interact with other network elements. In actual implementation, the UDM and UDR may be two independent physical entities, or the UDR may also be integrated into the UDM, and embodiments of the present disclosure do not impose limitations on this.

The AF is mainly responsible for providing service data of various applications to a control plane network element of an operator's communication network, or obtaining data information and control information of the network from a control plane network element of the communication network.

As an example, in the network architecture shown in FIG. 2, the interface between the terminal device and the AMF is called an N1 interface, the interface between the access network device and the AMF is called an N2 interface, the interface between the access network device and the UPF is called an N3 interface, the interface between the UPF and the SMF may be called an N4 interface, and the interface between the UPF and the data network is called an N6 interface. Of course, in future communication systems, the names of these interfaces may remain unchanged or may be replaced by other names, and embodiments of the present disclosure do not impose limitations on this.

It should be noted that the core network control plane may adopt a service-based architecture, in which each control plane network element is connected to a service bus, and interactions between control plane network elements adopt service invocation, replacing a point-to-point communication mode in the traditional core network architecture. In a service-based architecture, a control plane network element exposes services to other control plane network element(s) for invocation by other control plane network element(s). In a point-to-point communication, a communication interface between control plane network elements has a specific set of messages that can only be used by the control plane network elements at both ends of the interface.

It can be understood that the communication system described in the embodiments of the present disclosure is for the purpose of more clearly illustrating the technical solutions of the embodiments of the present disclosure, and does not constitute a limitation on the technical solutions provided by the embodiments of the present disclosure. Those of ordinary skill in this art can know that with the evolution of the system architecture and the emergence of new service scenarios, the technical solutions provided by the embodiments of the present disclosure are also applicable to similar technical problems.

To facilitate understanding of the technical solutions of the present disclosure, some terms involved in the embodiments of the present disclosure are briefly introduced below.

### 1. Non-Public Network (NPN)

An NPN is a non-public 5G network that may be used in places such as enterprises or factories. The NPN may rely on the support of the Public Land Mobile Network (PLMN) to implement a public network integrated NPN (PNI-NPN), or the NPN may be implemented as a Standalone Non-Public Network (SNPN) without relying on the network functions of the PLMN.

### 2. SNPN

An SNPN is deployed independently and does not rely on a PLMN. An SNPN is identified by a PLMN ID + a network identifier (NID). The PLMN ID may be an inherent value reserved by a third-party operator or may be a specific value of a PLMN operator deploying the SNPN.

The cell broadcast information sent by a cell in the SNPN includes the PLMN ID+NID. A terminal device selects an SNPN to access based on the cell broadcast information and configured network selection configuration information. If the terminal device finds that the PLMN ID+NID in the network selection configuration information is different from the PLMN ID+NID sent by the network broadcast, the terminal device does not select the SNPN for access. The PLMN ID+NID in the network selection configuration information being different from the PLMN ID+NID sent by the network broadcast refers to that the PLMN in the network selection configuration information is different from the PLMN sent by the network broadcast, and/or the NID in the network selection configuration information is different from the NID sent by the network broadcast.

In the 3GPP Release 17 stage, the standard supports a terminal device to use a credential of a Credentials Holder (CH) to access an SNPN. If the CH provides a UDM or AUSF, the CH may be a PLMN or another SNPN; if the CH provides an Authentication, Authorization, Accounting server (AAA-S), the CH may be an enterprise or industry entity.

### 3. Group ID for network selection (GIN)

If different CHs form a consortium, each consortium is identified by a GIN.

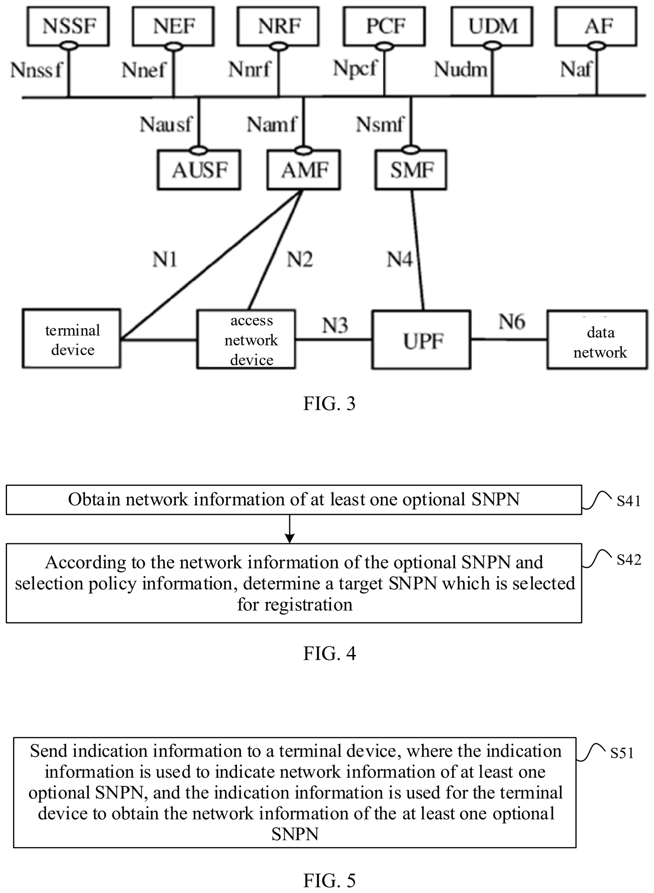

When a SNPN has a connection or agreement with one or more consortiums, a terminal device may access the SNPN using a credential of any CH in the one or more consortiums. FIG. 3 shows a schematic diagram of consortiums. A consortium contains one or more CHs, and each CH may be a PLMN, an SNPN, or an enterprise or industry entity. In FIG. 3, a CH being an SNPN is taken as an example.

Referring to FIG. 3, SNPNs A through E form a consortium 1, and SNPNs F through J form a consortium 2. The consortium 1 is identified by GIN 1, and the consortium 2 is identified by GIN 2. Furthermore, the SNPN X has a connection or agreement with the consortium 1. Cell broadcast information sent by a radio access network device in the SNPN X includes GIN 1, indicating that the SNPN X supports the consortium 1. The SNPN Y has connections or agreements with the consortium 1 and consortium 2. Cell broadcast information sent by a radio access network device in the SNPN Y includes GIN 1 and GIN 2, indicating that the SNPN X supports the consortium 1 and consortium 2.

If a terminal device is configured with an identifier of any member of the consortium 1, such as an identifier of the SNPN A, the terminal device may select the SNPN X, and may select the SNPN Y. If a terminal device is configured with an identifier of any member of the consortium 2, such as an identifier of the SNPN F, but the terminal device is not configured with an identifier of any member of the consortium 1, the terminal device can select the SNPN Y but cannot select the SNPN X. In addition, any member of a consortium, such as the SNPN A or the SNPN F, can dynamically update the network selection configuration information about a GIN on the terminal device.

In the CH-based architecture, a new SNPN selection mechanism is defined. In this mechanism, the network selection configuration information on a terminal device, the cell broadcast information sent by an access network device, and the scheme for the terminal device to select an SNPN are as follows:
1 ) The network selection configuration information on the terminal device includes one or more of the following a) to c):
   a) User controlled prioritized list of preferred SNPNs
      The SNPNs in the SNPN list may be configured or updated by a user.
   b) CH controlled prioritized list of preferred SNPNs
      The SNPNs in the SNPN list are controlled by a CH and may be configured or updated by a Core Network (CN).
   c) CH controlled prioritized list of preferred GINs

Each GIN in the GIN list is used to identify a group formed by multiple CHs, and the group is also called a consortium.

The GINs in the GIN list are controlled by a CH and may be configured or updated by a CN.

2 ) The cell broadcast information sent by the access network device includes one or more of the following a) to c):
a) First indication information, indicating whether a SNPN which the access network device resides in supports the terminal device to access the SNPN using a credential from a CH;
b) The GIN list supported by the SNPN which the access network device resides in
   The CHs supported by the SNPN is the CHs identified by the GINs in the GIN list.
c) Second indication information, indicating whether a terminal device that is not explicitly configured to select the SNPN is allowed to attempt registration.

3) The terminal device performs SNPN selection in the following order based on the network selection configuration information of the terminal device:
a) selecting an SNPN which an access network device sending the first indication information resides in, where the first indication information indicates that the SNPN which the access network device resides in supports the terminal device to access the SNPN using a credential from a CH;

If the cell broadcast information sent by multiple access network devices includes the first indication information, an SNPN is selected from SNPNs which the multiple access network devices resides in according to the following priority order:
Priority 1: selecting an SNPN in the user controlled prioritized list of preferred SNPNs (according to the priority order of the SNPNs in the user controlled prioritized list of preferred SNPNs);
Priority 2: selecting an SNPN in the CH controlled prioritized list of preferred SNPNs (according to the priority order of the SNPNs in the CH controlled prioritized list of preferred SNPNs);
Priority 3: selecting a GIN which is broadcast and is included in the CH controlled prioritized list of preferred GINs, and then selecting an SNPN which an access network device broadcasting the GIN resides in (according to the priority order of the GINs in the CH controlled prioritized list of preferred GINs);

If no SNPN is selected by the above method, the following b) is performed:
b) selecting an SNPN which an access network device that broadcasts the second indication information resides in, where the second indication information indicates that a terminal device that is not explicitly configured to select the SNPN is allowed to attempt registration.

The description is made below with an example.

### Example 1:

It is assumed that the network selection configuration information on a terminal device 1 includes:
a) user controlled prioritized list of preferred SNPNs: {SNPN#1, SNPN#2, SNPN#3};
b) CH controlled prioritized list of preferred SNPNs: {SNPN#4, SNPN#5, SNPN#6};
c) CH controlled prioritized list of preferred GINs: {GIN#1, GIN#2, GIN#3}.

The network selection configuration information on a terminal device 2 includes:
a) user controlled prioritized list of preferred SNPNs: {SNPN#7, SNPN#8, SNPN#9};
b) CH controlled prioritized list of preferred SNPNs: {SNPN#10, SNPN#11, SNPN # 12};
c) CH controlled prioritized list of preferred GINs: {GIN#4, GIN#5, GIN#6}.

The cell broadcast information sent by an access network device 1 (corresponding to SNPN#1) includes:
a) first indication information, indicating that SNPN#1 supports a terminal device to use a credential from a CH to access the SNPN#1;
b) list of GINs supported by SNPN#1: {GIN#1, GIN#2, GIN#3, GIN#4, GIN#5, GIN#6};
c) second indication information, indicating that a terminal device that is not explicitly configured to select the SNPN is not allowed to attempt registration.

The cell broadcast information sent by an access network device 2 (corresponding to SNPN#4) includes:
a) first indication information, indicating that SNPN#4 supports a terminal device to use a credential from a CH to access the SNPN#4;
b) list of GINs supported by SNPN#4: {GIN#1, GIN#2, GIN#3, GIN#4};
c) second indication information, indicating that a terminal device that is not explicitly configured to select the SNPN is allowed to attempt registration.

The cell broadcast information sent by an access network device 3 (corresponding to SNPN#10) includes:
a) first indication information, indicating that SNPN#10 supports a terminal device to use a credential from a CH to access SNPN#10;
b) list of GINs supported by SNPN#10: {GIN#1, GIN#2, GIN#3, GIN#4};
c) second indication information, indicating that a terminal device that is not explicitly configured to select the SNPN is allowed to attempt registration.

It should be noted that for any list in the above-mentioned network selection configuration information of the terminal device or the cell broadcast information sent by the access network device(s), the order of appearance of elements in the list represents a priority level, where the first one to appear has a higher priority and the later one has a lower priority. For example, in {SNPN#1, SNPN#2, SNPN#3}, the priority from high to low is: SNPN#1, SNPN#2, SNPN#3.

According to the above SNPN selection mechanism, terminal device#1 selects SNPN#1 from SNPN#1, SNPN#4 and SNPN#10, and terminal device#2 selects SNPN#10 from SNPN#1, SNPN#4 and SNPN#10.

In addition, in order to facilitate understanding of the embodiments of the present disclosure, the following points are explained.

First, in the embodiments of the present disclosure, "used to indicate" may include being used for direct indication and being used for indirect indication. When describing that certain information is used to indicate A, it may include that the information carries A, or it may also include that the information directly indicates A or indirectly indicates A, but it does not mean that the information necessarily carries A.

Information indicated by the information is called information to be indicated. In a specific implementation, there are many ways to indicate the information to be indicated. For example, but not limited to, the information to be indicated may be directly indicated, such as the information to be indicated itself or an index of the information to be indicated. The information to be indicated may also be indirectly indicated by indicating other information, where there is an association between the other information and the information to be indicated. It is also possible to indicate only a part of the information to be indicated, while the other parts of the information to be indicated are known or agreed in advance. For example, the indication of specific information may be achieved by using the arrangement order of each piece of information that is agreed in advance (for example, specified by a protocol), thereby reducing the indication overhead to a certain extent.

The information to be indicated may be sent as a whole or as multiple pieces of sub-information that are sent separately. The sending periods and/or timing of these pieces of sub-information may be the same or different. The specific sending method is not limited in the present disclosure. The sending periods and/or timing of these pieces of sub-information may be predefined, for example, may be predefined according to a protocol.

Second, in the present disclosure, the "first", "second", and various numerical numbers (e.g., "#1", "#2") are merely used to distinguishing objects for ease of description and are not intended to limit the scope of the embodiments of the present disclosure. For example, the "first", "second", and various numerical numbers (e.g., "#1", "#2") are used to distinguish different information, etc.

Third, the embodiments of the present disclosure list multiple implementations to clearly illustrate the technical solutions of the embodiments of the present disclosure. Of course, those skilled in the art can understand that the multiple embodiments provided in the embodiments of the present disclosure may be implemented individually, or may also be combined with the methods of other embodiments among the embodiments of the present disclosure, or may be implemented in combination with some methods in other related art after the embodiments are implemented individually or in combination, and embodiments of the present disclosure are not limited to this.

In related art, during a network selection procedure, a terminal device determines a priority order of at least one optional SNPN according to network selection configuration information on the terminal device, and attempts registration in sequence.

However, the optional SNPN(s) is(are) used to provide network services for specific terminal device(s), and there are corresponding validity condition(s) that need(s) to be met. How to simultaneously consider the validity condition(s) during the network selection procedure is an urgent problem that needs to be solved.

In view of the above, embodiments of the present disclosure provide a network selection method, in which a terminal device obtains network information of at least one optional SNPN; according to the network information of the optional SNPN and selection policy information, the terminal device determines a target SNPN which is selected for registration. Thus, the terminal device can simultaneously consider validity condition(s) during the network selection procedure, thereby improving network selection efficiency.

The following describes in detail a network selection method and apparatus provided by the present disclosure with reference to the accompanying drawings.

FIG. 4 is a flowchart of a network selection method provided by an embodiment of the present disclosure. As shown in FIG. 4, the method is executed by a terminal device. The method may include but is not limited to the following steps:

In S41, network information of at least one optional SNPN is obtained.

In the embodiment of the present disclosure, the terminal device may obtain network information of at least one SNPN.

In some embodiments, obtaining the network information of at least one optional SNPN by the terminal device includes: receiving indication information sent by an access network device; where the indication information is used to indicate the network information of at least one optional SNPN; and obtaining the network information of the at least one optional SNPN according to the indication information.

In the embodiments of the present disclosure, the terminal device can receive indication information sent by the access network device, where the indication information is used to indicate the network information of the at least one optional SNPN. Thus, the terminal device can obtain the network information of the at least one optional SNPN according to the indication information.

The terminal device may receive the indication information sent by the access network device in a broadcast manner.

Of course, the terminal device may receive indication information sent by the access network device in other manners, and the embodiments of the present disclosure do not impose specific limitations on this.

In S42, a target SNPN which is selected for registration is determined according to the network information of the optional SNPN(s) and selection policy information.

In the embodiment of the present disclosure, in a case that the terminal device obtains the at least one optional SNPN, the terminal device can determine the target SNPN which is selected for registration according to the network information of the optional SNPN(s) and the selection policy information.

The terminal device may determine the selection policy information. The selection policy information may be network selection configuration information on the terminal device, or may also be a part of the network selection configuration information, or may also include the network selection configuration information, as well as other information other than the network selection configuration information, etc.

The selection policy information includes at least one of the following:
a first list, where the first list includes network identifiers of user controlled first candidate SNPNs, first priority information, and first validity conditions corresponding to the network identifiers of the first candidate SNPNs;
a second list, where the second list includes network identifiers of credentials holder controlled second candidate SNPNs, second priority information, and second validity conditions corresponding to the network identifiers of the second SNPNs;
a third list, where the third list includes credentials holder controlled candidate group identifies GINs, third priority information, and third validity conditions corresponding to the candidate GINs.

In the embodiment of the present disclosure, the selection policy information includes at least one of the first list, the second list, and the third list.

In the embodiment of the present disclosure, at least one of the first list, the second list, and the third list may be a new list different from list(s) in the network selection configuration information.

The first list includes the network identifiers of user controlled first candidate SNPNs, the first priority information, and the first validity conditions corresponding to the network identifiers of the first candidate SNPNs.

In an embodiment of the present disclosure, the first list may reuse an existing list, or may be a new list which includes the network identifiers of the user controlled first candidate SNPNs, the first priority information, and the first validity conditions corresponding to the network identifiers of the first candidate SNPNs.

In an implementation, the first list may be a new list, and information in the user controlled prioritized list of preferred SNPNs, such as the network identifiers of the user controlled first candidate SNPNs and the first priority information, may be placed in the new first list.

In an implementation, the first list may reuse the user controlled prioritized list of preferred SNPNs, and content(s) may be added to the user controlled prioritized list of preferred SNPNs, such as adding information about the first validity conditions corresponding to the network identifiers of the first candidate SNPNs.

It can be understood that the information in the first list is maintained locally on the terminal device and may be updated and maintained based on information of the terminal device itself, or based on a configuration of an access network device or a core network device.

The second list includes network identifiers of credentials holder controlled second candidate SNPNs, the second priority information, and the second validity conditions corresponding to the network identifiers of the second SNPNs.

In an embodiment of the present disclosure, the second list may reuse an existing list, or may be a new list which includes the network identifiers of credentials holder controlled second candidate SNPNs, the second priority information, and the second validity conditions corresponding to the network identifiers of the second candidate SNPNs.

In an implementation, the second list may be a new list, and information in the credentials holder controlled prioritized list of preferred SNPNs, such as the network identifiers of the credentials holder controlled second candidate SNPNs and the second priority information, may be placed in the new second list.

In an implementation, the second list may reuse the credentials holder controlled prioritized list of preferred SNPNs, and content(s) may be added to the credentials holder controlled prioritized list of preferred SNPNs, such as adding information about the second validity conditions corresponding to the network identifiers of the second candidate SNPNs.

It can be understood that the information in the second list is maintained locally on the terminal device and may be updated and maintained based on information of the terminal device itself, or based on a configuration of an access network device or a core network device.

The third list includes the credentials holder controlled candidate group identities GINs, third priority information, and third validity conditions corresponding to the candidate GINs.

In an embodiment of the present disclosure, the third list may reuse an existing list, or may be a new list which includes credentials holder controlled candidate group identities GINs, the third priority information, and the third validity conditions corresponding to the candidate GINs.

In an implementation, the third list may be a new list, and information in the CH controlled prioritized list of preferred GINs, such as the credentials holder controlled candidate group identities GINs and the third priority information, may be placed in the new second list.

In an implementation, the third list may reuse the CH controlled prioritized list of preferred GINs, and content(s) may be added to the CH controlled prioritized list of preferred GINs, such as adding information about the credentials holder controlled candidate group identities GINs and the third validity conditions.

It can be understood that the information in the third list is maintained locally on the terminal device and may be updated and maintained based on information of the terminal device itself, or based on a configuration of an access network device or a core network device.

It should be noted that the above embodiments are not exhaustive and are only illustrations of a part of embodiments. The above embodiments may be implemented individually or in combination. The above embodiments are only for illustration and are not intended to be specific limitations on the scope of protection of the embodiments of the present disclosure.

In the embodiments of the present disclosure, the terminal can obtain the network information of at least one optional SNPN in a case that a condition required for network selection is met, so as to determine the target SNPN which is selected for registration according to the network information of the optional SNPN(s) and the selection policy information.

The condition required for network selection may be a condition in related art, or other condition(s), and embodiments of the present disclosure do not impose specific limitations on this.

In a possible implementation, if a terminal device supports accessing an SNPN providing access for localized services and an end user enables to access localized services, for automatic network selection, the terminal device may attempt registration on optional SNPNs in a specified order. The terminal device may obtain the network information of at least one optional SNPN, determine the specified order according to the network information of the optional SNPN(s) and the selection policy information, and attempts registration on the optional SNPN(s) in the specified order to determine the target SNPN selected for registration.

Optionally, the terminal device may support access to an SNPN using credentials from a credentials holder.

In some embodiments, a first validity condition includes first valid time information and/or first valid location information; or a second validity condition includes second valid time information and/or second valid location information; or a third validity condition includes third valid time information and/or third valid location information.

In an embodiment of the present disclosure, the first validity condition may include the first valid time information and/or the first valid location information.

The first valid time information may be a time period in the first list during which access to a first candidate SNPN is allowed, and the time period is defined by a start time and an end time.

The first valid location information may be location information of an area in the first list where access to a first candidate SNPN is allowed, such as geographic location information and/or tracking area information of a serving network, etc.

In an embodiment of the present disclosure, the second validity condition may include the second valid time information and/or the second valid location information.

The second valid time information may be a time period during which access to a second candidate SNPN in the second list is allowed, and the time period is defined by a start time and an end time.

The second valid location information may be location information of an area where access to a second candidate SNPN in the second list is allowed, such as geographic location information and/or tracking area information of a serving network, etc.

In an embodiment of the present disclosure, the third validity condition may include the third valid time information and/or the third valid location information.

The third valid time information may be a time period during which access to a third candidate SNPN in the third list is allowed, and the time period is defined by a start time and an end time.

The third valid location information may be location information of an area where access to a third candidate SNPN in the third list is allowed, such as geographic location information and/or tracking area information of a serving network, etc.

In some embodiments, the selection policy information further includes: the last registered SNPN and a corresponding fourth validity condition.

In the embodiment of the present disclosure, the selection policy information may further include: the last registered SNPN and the corresponding fourth validity condition.

It can be understood that the last registered SNPN is maintained locally on the terminal device, and the terminal device may determine and record the last registered SNPN.

In some embodiments, the fourth validity condition includes fourth valid time information and/or fourth valid location information.

In the embodiment of the present disclosure, the fourth validity condition may include the fourth valid time information and/or the fourth valid location information.

The fourth valid time information may be a time period during which access to the last registered SNPN is allowed, and the time period is defined by a start time and an end time.

The fourth valid location information may be location information of an area where access to the last registered SNPN is allowed, such as geographic location information and/or tracking area information of a serving network, etc.

In some embodiments, the network information of the optional SNPN includes at least one of the following:
a network identifier of the optional SNPN;
a GIN of the optional SNPN.

In the embodiment of the present disclosure, the terminal device obtaining the network information of at least one optional SNPN may include obtaining the network identifier(s) of the at least one optional SNPN.

In the embodiment of the present disclosure, the terminal device obtaining network information of at least one optional SNPN may include obtaining the GIN(s) of the at least one optional SNPN.

It should be noted that the above embodiments are not exhaustive and are only illustrations of a part of embodiments. The above embodiments can be implemented individually or in combination. The above embodiments are only for illustration and are not intended to be specific limitations on the scope of protection of the embodiments of the present disclosure.

In some embodiments, determining, by the terminal device, the target SNPN which is selected for registration according to the network information of the optional SNPN(s) and the selection policy information, includes: determining whether there is an optional SNPN in the first list and a corresponding first priority order according to the network identifier of the optional SNPN(s), the network identifiers of the first candidate SNPNs and the first priority information; according to the first priority order, determining in sequence whether a first validity condition of the optional SNPN in the first list is met; and determining a first optional SNPN with a first validity condition which is met as the target SNPN, where the first optional SNPN is an optional SNPN existing in the first list.

In the embodiment of the present disclosure, the terminal device can determine whether there is an optional SNPN in the first list and the corresponding first priority order according to the network identifier of the optional SNPN, the network identifiers of the first candidate SNPNs and the first priority information.

And, according to the first priority order, the terminal device determines in sequence whether a first validity condition of the optional SNPN existing in the first list is met; the first optional SNPN with a first validity condition which is met is determined to be the target SNPN, where the first optional SNPN is an optional SNPN existing in the first list.

In a first example embodiment, the network identifiers of the optional SNPNs includes an identifier ID#1 of SNPN#1, an identifier ID#2 of SNPN#2, and an identifier ID#5 of SNPN#5. The network identifiers of the first candidate SNPNs include an identifier ID#2 of SNPN#2 and an identifier ID#3 of SNPN#3, and the first priority information indicates that SNPN#2 precedes SNPN#3.

Therefore, it can be determined that the optional SNPNs in the first list are SNPN#2 and SNPN#3, and the corresponding first priority order is SNPN#2 precedes SNPN#3.

According to the first priority order, whether first validity conditions of SNPN#2 and SNPN#3 are met is determined in sequence.

In a case, if the first validity condition of SNPN#2 is met, the SNPN#2 with the first validity condition which is met is determined to be the target SNPN.

In another case, if the first validity condition of SNPN#2 is not met, the terminal device continues to determine whether the first validity condition of SNPN#3 is met. If the first validity condition of SNPN#3 is met, the SNPN#3 with the first validity condition which is met is determined to be the target SNPN.

In some embodiments, the terminal device determines whether there is an optional SNPN in the second list and a corresponding second priority order according to the network identifier of the optional SNPN, the network identifiers of the second candidate SNPNs and the second priority information, where a first condition is met; according to the second priority order, the terminal device determines in sequence whether the second validity condition(s) of the optional SNPN(s) existing in the second list is met; the terminal device determines a second optional SNPN with a second validity condition which is met to be the target SNPN, where the second optional SNPN is an optional SNPN existing in the second list.

The first condition includes at least one of the following:
there is no optional SNPN in the first list;
none of first validity condition(s) of the optional SNPN(s) existing in the first list is met;
all of the optional SNPN(s), that exists(exist) in the first list and first validity condition(s) of which is(are) met, fails(fail) in registration during a registration procedure.

In an embodiment of the present disclosure, the terminal device meeting the first condition may be that there is no optional SNPN in the first list.

It can be understood that the terminal device may determine that there is no optional SNPN in the first list according to the network identifier(s) of the optional SNPN(s), the network identifiers of the first candidate SNPNs, and the first priority information.

In an embodiment of the present disclosure, the terminal device meeting the first condition may be that none of first validity condition(s) of the optional SNPN(s) in the first list is(are) met.

It can be understood that the terminal device determines whether the optional SNPN(s) exists(exist) in the first list and the corresponding first priority order according to the network identifier(s) of the optional SNPN(s), the network identifiers of the first candidate SNPNs and the first priority information; according to the first priority order, the terminal device determines in sequence whether first validity condition(s) of the optional SNPN(s) in the first list is(are) met. It is possible that none of the first validity condition(s) of the optional SNPN(s) existing in the first list is(are) met.

In an embodiment of the present disclosure, the terminal device meeting the first condition may be that all of optional SNPN(s), that exists(exist) in the first list and first validity condition(s) of which is(are) met, fails(fail) in registration during the registration procedure.

It can be understood that the terminal device determines whether optional SNPN(s) exists(exist) in the first list and the corresponding first priority order according to the network identifier(s) of the optional SNPN(s), the network identifiers of the first candidate SNPNs and the first priority information; according to the first priority order, the terminal device determines in sequence whether first validity condition(s) of the optional SNPN(s) existing in the first list is(are) met, and determines a first optional SNPN with a first validity condition which is met as the target SNPN. It is possible that the optional SNPN(s), that exists(exist) in the first list and first validity condition(s) of which is(are) met, all fails(fail) in registration during the registration procedure.

It should be noted that the above embodiments are not exhaustive and are only illustrations of some embodiments. The above embodiments can be implemented individually or in combination. The above embodiments are only for illustration and are not intended to be specific limitations on the scope of protection of the embodiments of the present disclosure.

In an embodiment of the present disclosure, in a case that the first condition is met, the terminal device can determine whether optional SNPN(s) exists(exist) in the second list and the corresponding second priority order according to the network identifier(s) of the optional SNPN(s), the network identifiers of the second candidate SNPNs and the second priority information.

And, according to the second priority order, the terminal device determines in sequence whether second validity condition(s) of the optional SNPN(s) existing in the second list is(are); the terminal device determines a second optional SNPN with a second validity condition which is met as the target SNPN, where the second optional SNPN is an optional SNPN in the second list.

As an example, following the above-mentioned first example embodiment, if the first validity condition of SNPN#3 is not met, the terminal device can determine whether optional SNPN(s) exists(exist) in the second list and the corresponding second priority order according to the network identifier(s) of the optional SNPN(s), the network identifiers of the second candidate SNPNs, and the second priority information.

The network identifiers of the second candidate SNPNs include an identifier ID#1 of SNPN#1 and an identifier ID#4 of SNPN#4, and the second priority information indicates that SNPN#4 precedes SNPN#1.

It can be determined that the optional SNPN existing in the second list is SNPN#1, and since there is only one optional SNPN, its second priority order is that SNPN#1 is the first.

Based on this, the terminal device can determine whether the second validity condition of the SNPN#1 is met.

In a case, if the second validity condition of SNPN#1 is met, the SNPN#1 with the second validity condition which is met is determined to be the target SNPN.

In some embodiments, the terminal device determines whether optional SNPN(s) exists(exist) in the third list and the corresponding third priority order according to the GIN(s) of the optional SNPN(s), candidate GINs and the third priority information, wherein a second condition is met; according to the third priority order, the terminal device determines in sequence whether third validity condition(s) of the optional SNPN(s) existing in the third list is(are) met; the terminal device determines a third optional SNPN with a third validity condition which is met to be the target SNPN; where the third optional SNPN is an optional SNPN existing in the third list.

The second condition includes at least one of the following:
there is no optional SNPN existing in the second list;
none of second validity condition(s) of the optional SNPN(s) existing in the second list is(are) met;
all of the optional SNPN(s), that exists(exist) in the second list and the second validity condition(s) of which is(are) met, fails(fail) in registration during the registration procedure.

In an embodiment of the present disclosure, the terminal device meeting the second condition may be that there is no optional SNPN existing in the second list.

It can be understood that the terminal device may determine that there is no optional SNPN existing in the second list according to the network identifier(s) of the optional SNPN(s), the network identifiers of the second candidate SNPNs, and the second priority information.

In an embodiment of the present disclosure, the terminal device meeting the second condition may be that none of second validity condition(s) of the optional SNPN(s) existing in the second list is(are) met.

It can be understood that the terminal device determines whether no optional SNPN exists in the second list and the corresponding second priority order according to the network identifier(s) of the optional SNPN(s), the network identifiers of the second candidate SNPNs and the second priority information; according to the second priority order, the terminal device determines in sequence whether the second validity condition(s) of the optional SNPN(s) existing in the second list is(are) met. It is possible that none of second validity condition(s) of the optional SNPN(s) existing in the second list is(are) met.

In an embodiment of the present disclosure, the terminal device meeting the second condition may be that all of the optional SNPN(s), that exists(exist) in the second list and the second validity condition(s) of which is(are) met, fails(fail) in registration during the registration procedure.

It can be understood that the terminal device determines whether no optional SNPN exists in the second list and the corresponding second priority order according to the network identifier(s) of the optional SNPN(s), the network identifiers of the second candidate SNPNs and the second priority information; according to the second priority order, the terminal device determines in sequence whether the second validity condition(s) of the optional SNPN(s) existing in the second list is(are) met, and determines a second optional SNPN with a second validity condition which is met as the target SNPN. It is possible that all of the optional SNPN(s), that exists(exist) in the second list and the second validity condition(s) of which is(are) met, fails(fail) in registration during the registration procedure.

It should be noted that the above embodiments are not exhaustive and are only illustrations of a part of embodiments. The above embodiments can be implemented individually or in combination. The above embodiments are only for illustration and are not intended to be specific limitations on the scope of protection of the embodiments of the present disclosure.

In an embodiment of the present disclosure, in a case that the second condition is met, the terminal device may determine whether optional SNPN(s) exists(exist) in the third list and the corresponding third priority order according to the GIN(s) of the optional SNPN(s), the candidate GINs and the third priority information.

And, according to the third priority order, the terminal device determines in sequence whether the third validity condition(s) of the optional SNPN(s) existing in the third list is(are) met; the terminal device determines a third optional SNPN with a third validity condition which is met as the target SNPN, where the third optional SNPN is an optional SNPN existing in the third list.

As an example, following the above-mentioned first example embodiment, if the second validity condition of SNPN#1 is not met, the terminal device may determine whether optional SNPN(s) exists(exist) in the third list and the corresponding third priority order according to the network identifier(s) of the optional SNPN(s), the network identifiers of the third candidate SNPNs, and the third priority information.

The network identifiers of the third candidate SNPNs includes an identifier ID#5 of SNPN#5 and an identifier ID#6 of SNPN#6, and the third priority information indicates that SNPN#5 precedes SNPN#6.

Thus, it can be determined that the optional SNPN existing in the third list is SNPN#5, and since there is only one optional SNPN, its second priority order is SNPN#1 as the first.

Based on this, the terminal device may determine whether the third validity condition of SNPN#5 is met.

In a case, if the third validity condition of SNPN#5 is met, SNPN#5 with the third validity condition which is met is determined to be the target SNPN.

In some embodiments, determining, by the terminal device, the target SNPN which is selected for registration according to the network information of the optional SNPN(s) and the selection policy information, includes: determining whether the optional SNPN(s) exists(exist) in the first list and the corresponding first priority order according to the network identifier(s) of the optional SNPN(s), the network identifiers of the first candidate SNPNs and the first priority information; determining whether the optional SNPN(s) exists(exist) in the second list and the corresponding second priority order according to the network identifier(s) of the optional SNPN(s), the network identifiers of the second candidate SNPNs and the second priority information; determining whether the optional SNPN(s) exists(exist) in the third list and the corresponding third priority order according to the GIN(s) of the optional SNPN(s), the candidate GINs and the third priority information; according to the first priority order, determining in sequence whether first validity condition(s) of the optional SNPN(s) existing in the first list is(are) met; determining a first optional SNPN with a first validity condition which is met as the target SNPN, where the first optional SNPN is an optional SNPN in the first list.

In the embodiment of the present disclosure, the terminal device can determine whether optional SNPN(s) exists(exist) in the first list and the corresponding first priority order according to the network identifier(s) of the optional SNPN(s), the network identifiers of the first candidate SNPN and the first priority information; the terminal device can determine whether optional SNPN(s) exists(exist) in the second list and the corresponding second priority order according to the network identifier(s) of the optional SNPN(s), the network identifiers of the second candidate SNPNs and the second priority information; the terminal device can determine whether optional SNPN(s) exists(exist) in the third list and the corresponding third priority order according to the GIN(s) of the optional SNPN(s), the candidate GINs and the third priority information.

And, according to the first priority order, the terminal device determines in sequence whether first validity condition(s) of the optional SNPN(s) existing in the first list is(are) met; the terminal device determines a first optional SNPN with a first validity condition which is met as the target SNPN, where the first optional SNPN is an optional SNPN existing in the first list.

In a second example embodiment, the network identifiers of the optional SNPNs include an identifier ID#1 of SNPN#1, an identifier ID#2 of SNPN#2, and an identifier ID#5 of SNPN#5. The network identifiers of the first candidate SNPNs include an identifier ID#2 of SNPN#2 and an identifier ID#3 of SNPN#3, and the first priority information indicates that SNPN#2 precedes SNPN#3. The network identifiers of the second candidate SNPNs include an identifier ID#1 of SNPN#1 and an identifier ID#4 of SNPN#4, and the second priority information indicates that SNPN#4 precedes SNPN#1. The network identifiers of the third candidate SNPNs include an identifier ID#5 of SNPN#5 and an identifier ID#6 of SNPN#6, and the third priority information indicates that SNPN#5 precedes SNPN#6.

Therefore, it can be determined that the optional SNPNs existing in the first list are SNPN#2 and SNPN#3, and the corresponding first priority order is SNPN#2 precedes SNPN#3; the optional SNPN existing in the second list is SNPN#1, and the optional SNPN existing in the third list is SNPN#5.

According to the first priority order, the terminal device determines in sequence whether first validity conditions of SNPN#2 and SNPN#3 are met.

In a case, if the first validity condition of SNPN#2 is met, SNPN#2 with the first validity condition which is met is determined to be the target SNPN.

In another case, if the first validity condition of SNPN#2 is not met, the terminal device continues to determine whether the first validity condition of SNPN#3 is met. If the first validity condition of SNPN#3 is met, SNPN#3 with the first validity condition which is met is determined to be the target SNPN.

In some embodiments, the terminal device determines in sequence whether the second validity condition(s) of the optional SNPN(s) existing in the second list is(are) met according to the second priority order, where the first condition is met; and the terminal device determines that a second optional SNPN with a second validity condition which is met as the target SNPN, wherein the second optional SNPN is an optional SNPN existing in the second list.

The first condition includes at least one of the following:
there is no optional SNPN in the first list;
none of first validity condition(s) of the optional SNPN(s) existing in the first list is met;
all of the optional SNPN(s), that exists(exist) in the first list and first validity condition(s) of which is(are) met, fails(fail) in registration during a registration procedure.

In an embodiment of the present disclosure, the terminal device meeting the first condition may be that there is no optional SNPN in the first list.

It can be understood that the terminal device may determine that there is no optional SNPN in the first list according to the network identifier(s) of the optional SNPN(s), the network identifiers of the first candidate SNPNs, and the first priority information.

In an embodiment of the present disclosure, the terminal device meeting the first condition may be that none of first validity condition(s) of the optional SNPN(s) in the first list is(are) met.

It can be understood that the terminal device determines whether the optional SNPN(s) exists(exist) in the first list and the corresponding first priority order according to the network identifier(s) of the optional SNPN(s), the network identifiers of the first candidate SNPNs and the first priority information; according to the first priority order, the terminal device determines in sequence whether first validity condition(s) of the optional SNPN(s) in the first list is(are) met. It is possible that none of the first validity condition(s) of the optional SNPN(s) existing in the first list is(are) met.

In an embodiment of the present disclosure, the terminal device meeting the first condition may be that all of optional SNPN(s), that exists(exist) in the first list and first validity condition(s) of which is(are) met, fails(fail) in registration during the registration procedure.

It can be understood that the terminal device determines whether optional SNPN(s) exists(exist) in the first list and the corresponding first priority order according to the network identifier(s) of the optional SNPN(s), the network identifiers of the first candidate SNPNs and the first priority information; according to the first priority order, the terminal device determines in sequence whether first validity condition(s) of the optional SNPN(s) existing in the first list is(are) met, and determines a first optional SNPN with a first validity condition which is met as the target SNPN. It is possible that the optional SNPN(s), that exists(exist) in the first list and first validity condition(s) of which is(are) met, all fails(fail) in registration during the registration procedure.

It should be noted that the above embodiments are not exhaustive and are only illustrations of a part of embodiments. The above embodiments can be implemented individually or in combination. The above embodiments are only for illustration and are not intended to be specific limitations on the scope of protection of the embodiments of the present disclosure.

In an embodiment of the present disclosure, in a case that the first condition is met, the terminal device can determine in sequence according to the second priority order whether second validity condition(s) of the optional SNPN(s) existing in the second list is(are) met; the terminal device determines a second optional SNPN with a second validity condition which is met as the target SNPN, where the second optional SNPN is an optional SNPN existing in the second list.

As an example, following the above second example embodiment, if the first validity condition of SNPN#3 is not met, the terminal device may determine whether the second validity condition of SNPN# 1 is met.

In a case, if the second validity condition of SNPN#1 is met, SNPN#1 with the second validity condition which is met is determined to be the target SNPN.

In some embodiments, according to the third priority order, the terminal device determines in sequence whether the third validity condition(s) of optional SNPN(s) existing in the third list is(are) met, where the second condition is met; the terminal determines a third optional SNPN with a third validity condition which is met as the target SNPN, where the third optional SNPN is an optional SNPN existing in the third list.

The second condition includes at least one of the following:
there is no optional SNPN existing in the second list;
none of second validity condition(s) of the optional SNPN(s) existing in the second list is(are) met;
all of the optional SNPN(s), that exists(exist) in the second list and the second validity condition(s) of which is(are) met, fails(fail) in registration during the registration procedure.

In an embodiment of the present disclosure, the terminal device meeting the second condition may be that there is no optional SNPN existing in the second list.

It can be understood that the terminal device may determine that there is no optional SNPN existing in the second list according to the network identifier(s) of the optional SNPN(s), the network identifiers of the second candidate SNPNs, and the second priority information.

In an embodiment of the present disclosure, the terminal device meeting the second condition may be that none of second validity condition(s) of the optional SNPN(s) existing in the second list is(are) met.

It can be understood that the terminal device determines whether no optional SNPN exists in the second list and the corresponding second priority order according to the network identifier(s) of the optional SNPN(s), the network identifiers of the second candidate SNPNs and the second priority information; according to the second priority order, the terminal device determines in sequence whether the second validity condition(s) of the optional SNPN(s) existing in the second list is(are) met. It is possible that none of second validity condition(s) of the optional SNPN(s) existing in the second list is(are) met.

In an embodiment of the present disclosure, the terminal device meeting the second condition may be that all of the optional SNPN(s), that exists(exist) in the second list and the second validity condition(s) of which is(are) met, fails(fail) in registration during the registration procedure.

It can be understood that the terminal device determines whether no optional SNPN exists in the second list and the corresponding second priority order according to the network identifier(s) of the optional SNPN(s), the network identifiers of the second candidate SNPNs and the second priority information; according to the second priority order, the terminal device determines in sequence whether the second validity condition(s) of the optional SNPN(s) existing in the second list is(are) met, and determines a second optional SNPN with a second validity condition which is met as the target SNPN. It is possible that all of the optional SNPN(s), that exists(exist) in the second list and the second validity condition(s) of which is(are) met, fails(fail) in registration during the registration procedure.

It should be noted that the above embodiments are not exhaustive and are only illustrations of a part of embodiments. The above embodiments can be implemented individually or in combination. The above embodiments are only for illustration and are not intended to be specific limitations on the scope of protection of the embodiments of the present disclosure.

In an embodiment of the present disclosure, in a case that the second condition is met, the terminal device may determine in sequence according to the third priority order whether third validity condition(s) of the optional SNPN(s) existing in the third list is(are) met; the terminal device determines a third optional SNPN with a third validity condition which is met as the target SNPN, where the third optional SNPN is an optional SNPN existing in the third list.

For example, following the above second example embodiment, if the second validity condition of SNPN#1 is not meet, the terminal device may determine whether the third validity condition of SNPN#5 is met.

In a case, if the third validity condition of SNPN#5 is met, the SNPN#5 with the third validity condition which is met is determined to be the target SNPN.

In some embodiments, the terminal device determines that the network selection fails, where a third condition is met.

In an embodiment of the present disclosure, the terminal device may determine that the network selection fails if it is determined that the third condition is met.

The third condition includes at least one of the following:
there is no optional SNPN existing in the third list;
none of third validity condition(s) of the optional SNPN(s) existing in the third list is(are) met;
all of the optional SNPN(s), that exists(exist) in the third list and the third validity condition(s) of which is(are) met, fails(fail) in registration during the registration procedure.

In an embodiment of the present disclosure, the terminal device meeting the third condition may be that there is no optional SNPN existing in the third list.

It can be understood that the terminal device may determine that there is no optional SNPN existing in the third list according to the GIN(s) of the optional SNPN(s), the candidate GINs and the third priority information.

In an embodiment of the present disclosure, the terminal device meeting the third condition may be that none of third validity condition(s) of the optional SNPN(s) existing in the third list is(are) met.

It can be understood that the terminal device determines whether optional SNPN(s) exists(exit) in the third list and the corresponding third priority order according to the GIN(s) of the optional SNPN(s), the candidate GINs and third priority information, where the second condition is met; according to the third priority order, the terminal device determines in sequence whether the third validity condition(s) of the optional SNPN(s) existing in the third list is(are) met. It is possible that none of third validity condition(s) of the optional SNPN(s) existing in the third list is(are) met.

In an embodiment of the present disclosure, the terminal device meeting the third condition may be that all of the optional SNPN(s), that exists(exist) in the third list and the third validity condition(s) of which is(are) met, fails(fail) in registration during the registration procedure.

It can be understood that the terminal device determines whether optional SNPN(s) exists(exist) in the third list and the corresponding third priority order according to the GIN(s) of the optional SNPN(s), candidate GINs and third priority information, wherein the second condition is met; according to the third priority order, the terminal device determines in sequence whether the third validity condition(s) of the optional SNPN(s) existing in the third list is(are) met, and the terminal device determines a third optional SNPN with a third validity condition which is met as the target SNPN. It is possible that all of the optional SNPN(s), that exists(exist) in the third list and the third validity condition(s) of which is(are) met, fails(fail) in registration during the registration procedure.

It should be noted that the above embodiments are not exhaustive and are only illustrations of a part of embodiments. The above embodiments can be implemented individually or in combination. The above embodiments are only for illustration and are not intended to be specific limitations on the scope of protection of the embodiments of the present disclosure.

As an example, following the above second example embodiment, if the third validity condition of SNPN#5 is not meet, it is determined that the network selection fails.

In some embodiments, the selection policy information further includes: the last registered SNPN and a corresponding fourth validity condition; where, before the terminal device determines whether optional SNPN(s) exists(exist) in the first list and the corresponding first priority order according to the network identifier(s) of the optional SNPN(s), the network identifiers of the first candidate SNPN and the first priority information, the method includes: determining, by the terminal device, whether there is an optional SNPN that is the same as or equivalent to the last registered SNPN according to the network identifier(s) of the optional SNPN(s) and the network identifier of the last registered SNPN; determining a fourth optional SNPN with a fourth validity condition which is met as the target SNPN, where the fourth optional SNPN is an optional SNPN that is the same as or equivalent to the last registered SNPN.

In the embodiment of the present disclosure, the selection policy information further includes: the last registered SNPN and the corresponding fourth validity condition.

Before the terminal device determines whether optional SNPN(s) exists(exist) in the first list and the corresponding first priority order according to the network identifier(s) of the optional SNPN(s), the network identifiers of the first candidate SNPNs and the first priority information, the terminal device may also determine whether there is an optional SNPN that is the same as or equivalent to the last registered SNPN according to the network identifier(s) of the optional SNPN(s) and the network identifier of the last registered SNPN; the terminal device determines a fourth optional SNPN with a fourth validity condition which is met as the target SNPN, where the fourth optional SNPN is an optional SNPN that is the same as or equivalent to the last registered SNPN.

In some embodiments, the terminal device determines to cancel execution of determination of whether the optional SNPN(s) exists(exist) in the first list and the corresponding first priority order according to the network identifier(s) of the optional SNPN(s), the network identifiers of the first candidate SNPNs and the first priority information.

In an embodiment of the present disclosure, the terminal device determines a fourth optional SNPN with a fourth validity condition which is met as the target SNPN according to the network identifier(s) of the optional SNPN(s) and the network identifier of the last registered SNPN. In a case that the fourth optional SNPN is an optional SNPN that is the same as or equivalent to the last registered SNPN, the terminal device determines to cancel the execution of determination of whether the optional SNPN(s) exists(exist) in the first list and the corresponding first priority order according to the network identifier(s) of the optional SNPN(s), the network identifiers of the first candidate SNPNs and the first priority information.

It can be understood that the terminal device determines the fourth optional SNPN with the fourth validity condition which is met as the target SNPN according to the network identifier(s) of the optional SNPN(s) and the network identifier of the last registered SNPN. If the fourth optional SNPN is an optional SNPN that is the same as or equivalent to the last registered SNPN, the network selection of the terminal device is successful in this case, and the terminal device can determine to cancel the execution of determination of whether the optional SNPN(s) exists(exist) in the first list and the corresponding first priority order according to the network identifier(s) of the optional SNPN(s), the network identifiers of the first candidate SNPNs and the first priority information.

In some embodiments, the terminal device determines to execute determination of whether the optional SNPN(s) exists(exist) in the first list and the corresponding first priority order according to the network identifier(s) of the optional SNPN(s), the network identifiers of the first candidate SNPNs and the first priority information, where a fourth condition is met.

The fourth condition includes at least one of the following:
there is no optional SNPN that is the same as or equivalent to the last registered SNPN;
a fourth validity condition of the optional SNPN that is the same as or equivalent to the last registered SNPN is not met;
the optional SNPN that is the same as or equivalent to the last registered SNPN fails in registration during the registration procedure.

In an embodiment of the present disclosure, in a case that the fourth condition is met, the terminal device can determine to execute determination of whether the optional SNPN(s) exists(exist) in the first list and the corresponding first priority order according to the network identifier(s) of the optional SNPN(s), the network identifiers of the first candidate SNPNs and the first priority information.

In an embodiment of the present disclosure, the terminal device determines that the fourth condition is met, and the fourth condition may include that there is no optional SNPN that is the same as or equivalent to the last registered SNPN.

It can be understood that the terminal device may determine that there is no optional SNPN that is the same as or equivalent to the last registered SNPN according to the network identifier(s) of the optional SNPN(s) and the network identifier of the last registered SNPN.

In an embodiment of the present disclosure, the terminal device determines that the fourth condition is met, and the fourth condition may include that the fourth validity condition of the optional SNPN that is the same as or equivalent to the last registered SNPN is not met.

It can be understood that the terminal device determines that there is an optional SNPN that is the same as or equivalent to the last registered SNPN according to the network identifier(s) of the optional SNPN(s) and the network identifier of the last registered SNPN. The terminal device may determine that the fourth validity condition of the optional SNPN that is the same as or equivalent to the last registered SNPN is not met.

It should be noted that the above embodiments are not exhaustive and are only illustrations of a part of embodiments. The above embodiments can be implemented individually or in combination. The above embodiments are only for illustration and are not intended to be specific limitations on the scope of protection of the embodiments of the present disclosure.

In an embodiment of the present disclosure, the terminal device determines that the fourth condition is met, and the fourth condition may include that the optional SNPN that is the same as or equivalent to the last registered SNPN fails in registration during the registration procedure.

It can be understood that the terminal device determines that there is an optional SNPN that is the same as or equivalent to the last registered SNPN according to the network identifier(s) of the optional SNPN(s) and the network identifier of the last registered SNPN; the terminal device determines the fourth optional SNPN with the fourth validity condition which is met as the target SNPN. It is possible that the optional SNPN (the fourth optional SNPN) that is the same as or equivalent to the last registered SNPN fails in registration during the registration procedure.

In the implementations or embodiments, unless there is any contradiction, respective steps can be implemented independently, or can be arbitrarily combined or order of the steps can be changed, and optional methods or optional examples can be arbitrarily combined and can be arbitrarily combined with other implementations or embodiments.

By implementing the embodiments of the present disclosure, the terminal device obtains network information of at least one optional SNPN, and determines the target SNPN which is selected for registration based on the network information of the optional SNPN(s) and selection policy information, where the selection policy information includes at least one of the first list, the second list, and the third list. Thus, the terminal device can simultaneously consider validity condition(s) during the network selection procedure, thereby improving network selection efficiency.

FIG. 5 is a flowchart of another network selection method provided by an embodiment of the present disclosure. As shown in FIG. 5, the method is performed by an access network device. The method may include but is not limited to the following steps:

In S51, indication information is sent to a terminal device. The indication information is used to indicate network information of at least one optional SNPN, and the indication information is used for the terminal device to obtain the network information of the at least one optional SNPN.

In the embodiment of the present disclosure, the access network device may send the indication information to the terminal device.

The indication information is used to indicate the network information of at least one optional SNPN, and the indication information is used for the terminal device to obtain the network information of the at least one optional SNPN.

The access network device may send the indication information to the terminal device in a broadcast manner.

Of course, the access network device may send the indication information to the terminal device in other ways, and embodiments of the present disclosure do not impose specific limitations on this.

In some embodiments, the network information of the optional SNPN includes at least one of the following:
network identifier(s) of the optional SNPN(s);
GIN(s) of the optional SNPN(s).

In an embodiment of the present disclosure, the terminal device obtaining the network information of the at least one optional SNPN may include obtaining network identifier(s) of the at least one optional SNPN.

In an embodiment of the present disclosure, the terminal device obtaining network information of the at least one optional SNPN may include obtaining the GIN(s) of the at least one optional SNPN.

It should be noted that the above embodiments are not exhaustive and are only illustrations of some embodiments. The above embodiments can be implemented individually or in combination. The above embodiments are only for illustration and are not intended to be specific limitations on the scope of protection of the embodiments of the present disclosure.

In the implementations or embodiments, unless there is any contradiction, respective steps can be implemented independently, or can be arbitrarily combined, or order of the steps can be changed, and optional methods or optional examples can be arbitrarily combined and can be arbitrarily combined with other implementations or embodiments.

By implementing the embodiments of the present disclosure, the access network device sends the indication information to the terminal device, where the indication information is used to indicate the network information of at least one optional SNPN, and the indication information is used for the terminal device to obtain the network information of the at least one optional SNPN. Thus, the access network device can send the indication information to the terminal device to indicate the network information of the at least one optional SNPN.

To facilitate understanding of the embodiments of the present disclosure, an example embodiment is provided.

In the example embodiment, a localized service is a service, which is provided at specific/limited area and/or can be bounded in time. The service can be realized via applications (e.g., live or on-demand audio/video stream, electric game, IMS, etc.), or connectivity (e.g., terminal device to terminal device, terminal device to Data Network, etc.).

A localized service provider is an application provider or network operator who makes their services localized and that are offered to an end user via a hosting network. A hosting network can be an SNPN or a PNI-NPN.

In some embodiment, the terminal device configuration and subscription aspects:

An SNPN-enabled terminal is configured with the following information for each subscribed SNPN:
- PLMN ID and NID of the subscribed SNPN;
- Subscription identifier (SUPI) and credentials for the subscribed SNPN;
- (Optionally) an N3IWF FQDN and an identifier of the country/region where the configured N3IWF is located;
- (Optionally) if the terminal device supports access to an SNPN using credentials from a Credentials Holder:
- User controlled prioritized list of preferred SNPNs;
- Credentials Holder controlled prioritized list of preferred SNPNs, each entry of the list includes;
- an SNPN identifier; and
- (optionally) validity information (if the terminal device supports access to an SNPN providing access for localized services)
- Credentials Holder controlled prioritized list of GINs, each entry of the list includes;
- a group identity for network selection; and
- (optionally) validity information (if the terminal device supports access to an SNPN providing access for localized services)
- Protection scheme for concealing the SUPI as defined in TS 33.501 [29];

NOTE: Additionally the terminal device can be configured to use anonymous SUCI as defined in TS 24.501 [47].

Validity information includes:
- time validity information, i.e., time period(s) (defined by start and end times) when access to the SNPN is allowed; and/or,
- location validity information including
- geolocation information, and/or,
- tracking area information of serving networks, i.e. lists of TACs per PLMN ID or per PLMN ID and NID.

NOTE X: The location validity information is used to aid the terminal device where to search for the SNPNs in the Credentials Holder controlled prioritized list of SNPNs and GINs and is not used for any area restriction enforcement.

In some embodiments, whether the Credentials Holder controlled prioritized lists of preferred SNPNs/GINs can be extended or if 2) a new list type is defined to provide entries with validity information to the terminal device and if any capability indications are needed for a terminal device that supports those validity conditions is FFS and to be determined by CT1.

Question 1: For the purpose of SNPN hosting network selection, SA2 wonders if CT1 would prefer to extend the existing CH controlled prioritized list of preferred SNPNs/GINs with optional validity conditions or define new CH controlled prioritized lists of SNPNs/GINs including optional validity conditions?

CT1 reviewed SA2 requirements on usage of those lists in automatic SNPN selection as in S2-2301443 and identified that:
- entries of (a) CH controlled prioritized list of preferred SNPNs and (b) CH controlled prioritized list of preferred GINs, are used in different steps of SNPN selection, depending on whether the entry is with or without validity conditions.
- entries of (a) CH controlled prioritized list of preferred SNPNs and (b) CH controlled prioritized list of preferred GINs, with validity conditions are used solely when the terminal device supports access to an SNPN providing access for localized services and the user enables to access localized services.

Based on the above, CT1 prefers to specify (a) a new list of CH controlled prioritized list of preferred SNPNs for access for localized services and (b) a new list of CH controlled prioritized list of preferred GINs for access for localized services.

NOTE 1: If the terminal device has multiple SNPN subscriptions it is assumed that the subscription to use for automatic selection is determined by implementation specific means prior to network selection.

In some embodiments, if the terminal device supports accessing an SNPN providing access for localized services and the end user enables to access localized services, for automatic network selection, the terminal device should select and attempts registration on available SNPN in the following order:
In some embodiments, (a) if the terminal device supports access to an SNPN using Credentials from a Credentials Holder then the terminal device continues by selecting and attempting registration on available and allowable SNPNs which broadcast the indication that access using credentials from a Credentials Holder is supported in the following order:
i. the SNPN with the validity information the UE was last registered with (if the validity information is met); Editor's note: Whether the Equivalent SNPN(s) has same validity information as the SNPN that providing access for localized services the UE was last registered is for FFS
ii. SNPN(s) in the Credentials Holder controlled prioritized list of preferred SNPNs (in priority order) if the validity information is available and is met; entries of the list of preferred SNPNs without validity information are ignored;
iii. SNPN(s), which additionally broadcast a GIN contained in the Credentials Holder controlled prioritized list of preferred GINs (in priority order) if validity information is available and is met; entries of the list of preferred GINs without validity information are ignored.

In some embodiments, (b) the SNPN without validity information the terminal device was last registered with (if available) or the equivalent SNPN (if available);
In some embodiments, (c) the subscribed SNPN, which is identified by the PLMN ID and NID for which the user has SUPI and credentials;
In some embodiments, (d) the available and allowable SNPNs which broadcast the indication that access using credentials from a Credentials Holder is supported in the following order:
   i. SNPNs in the user controlled prioritized list of preferred SNPNs (in priority order);
   ii. SNPNs in the Credentials Holder controlled prioritized list of preferred SNPNs (in priority order) without validity information;
   iii. SNPNs, which additionally broadcast a GIN contained in the Credentials Holder controlled prioritized list of preferred GINs (in priority order) without validity information;
   iv. SNPNs, which additionally broadcast an indication that the SNPN allows registration attempts from terminal devices that are not explicitly configured to select the SNPN, i.e. the broadcasted NID or GIN is not present in the Credentials Holder controlled prioritized lists of preferred SNPNs/GINs in the terminal device.

In some embodiments, if the terminal device supports accessing an SNPN providing access for localized services and the end user enables to access localized services the UE should periodically attempt reselection and registration on a higher priority SNPN 1) based on the order of the above sub-bullets (i) to (iii) of bullet (a), bullet (c), sub-bullets (i) to (iii) of bullet (d) if the terminal device is not registered to the sub-bullet (i) of bullet (a) or 2) based on the order of the above sub-bullets (ii) to (iii) of bullet (a), bullet (c), sub-bullets (i) to (iii) of bullet (d) if the terminal device is registered to the sub-bullet (i) of bullet (a) if any of the below conditions is met: - if there are one or more SNPNs with validity information which is met, and the terminal device is not registered to an SNPN which has highest priority among the one or more SNPNs; or
- if there is no SNPN with validity information which is met, and there are one or more GINs with the validity information which is met, and the terminal device is not registered to an SNPN broadcasting a GIN which has highest priority among the one or more GINs; or
- if there is no SNPN with validity information which is met and there is no GIN with validity information which is met, and the terminal device is not registered to the subscribed SNPN

Otherwise, the terminal device does not trigger periodic reselection and attempt registration on a higher priority SNPN

NOTE: Details of network selection (e.g., validity information handling, periodicity determination) specified in TS 23.122 [17].

In some embodiments, if the terminal device does not support to access an SNPN providing access for localized services or the end user does not enable to access the localized services, for automatic network selection the terminal device should select and attempts registration on available and allowable SNPNs in the following order:
- the SNPN without validity information the terminal device was last registered with (if available) or the equivalent SNPN (if available);
- the subscribed SNPN, which is identified by the PLMN ID and NID for which the terminal device has SUPI and credentials;
- if the terminal device supports access to an SNPN using credentials from a Credentials Holder then the terminal device continues by selecting and attempting registration on available and allowable SNPNs which broadcast the indication that access using credentials from a Credentials Holder is supported in the following order:
- SNPNs in the user controlled prioritized list of preferred SNPNs (in priority order);

Embodiments of the present disclosure define a new list of preferred SNPNs with validity information for a terminal device to perform the network selection for hosting network to provide the localized services. And, embodiments of the present disclosure define a new network selection based on the new list above.

In some embodiments, a new list of SNPNs/GINs that support localized services is defined as following:
- user controlled prioritized list of preferred SNPNs with validity conditions;
- Credentials Holder controlled prioritized list of preferred SNPNs with validity conditions;
- Credentials Holder controlled prioritized list of GINs with validity conditions.

The validity condition may include "valid time", or/and "location information".

It should be noted that the relevant steps in the above example embodiments have been described in detail in the above embodiments, and reference can be made to relevant description in the above embodiments, and repeated descriptions are omitted here.

In the above embodiments provided in the present disclosure, the methods provided in the embodiments of the present disclosure are introduced from the perspective of the terminal device and the access network device, respectively.

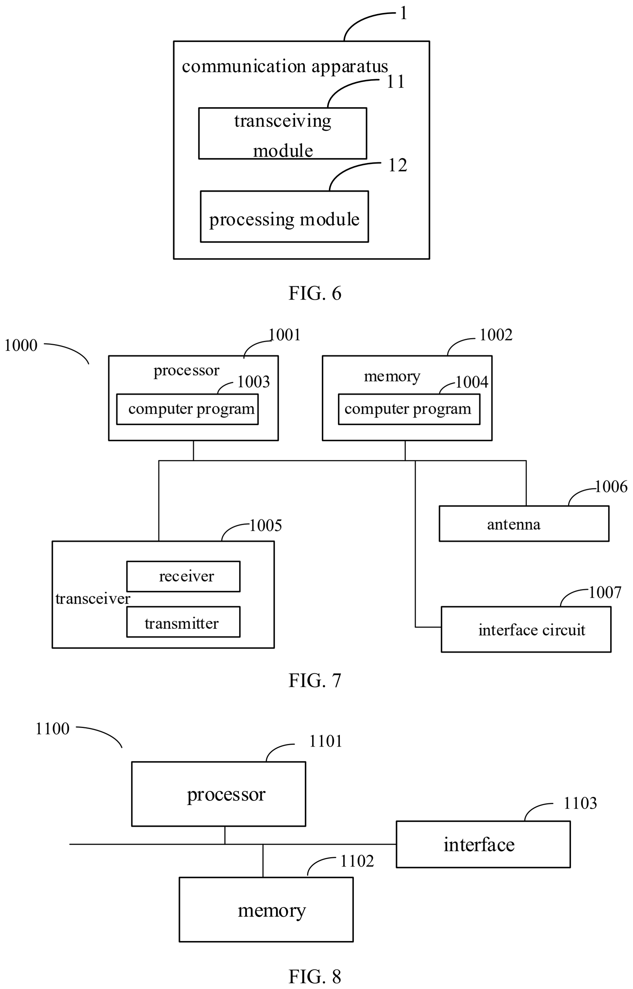

FIG. 6 is a schematic diagram of the structure of a communication apparatus 1 provided in an embodiment of the present disclosure. The communication apparatus 1 shown in FIG. 6 may include a transceiving module 11 and a processing module. The transceiving module may include a sending module and/or a receiving module. The sending module is used to implement a sending function, and the receiving module is used to implement a receiving function. The transceiving module can implement both the sending function and/or the receiving function.

The communication apparatus 1 may be a terminal device, or may be an apparatus in the terminal device, or may be an apparatus that can be used in conjunction with the terminal device. Alternatively, the communication apparatus 1 may be an access network device, or may be an apparatus in the access network device, or may be an apparatus that can be used in conjunction with the access network device.

The communication apparatus 1 is configured at the terminal device side:

The apparatus includes: a processing module 12.

The processing module 12 is configured to obtain network information of at least one optional Standalone Non-Public Network (SNPN); and according to the network information of the optional SNPN and selection policy information, determine a target SNPN which is selected for registration.

It should be noted that the relevant steps in the above example embodiments have been described in detail in the above embodiments, and reference can be made to relevant description in the above embodiments, and repeated descriptions are omitted here.

In the above embodiments provided in the present disclosure, the methods provided in the embodiments of the present disclosure are introduced from the perspective of the terminal device and the access network device, respectively.

FIG. 6 is a schematic diagram of the structure of a communication apparatus 1 provided in an embodiment of the present disclosure. The communication apparatus 1 shown in FIG. 6 may include a transceiving module 11 and a processing module. The transceiving module may include a sending module and/or a receiving module. The sending module is used to implement a sending function, and the receiving module is used to implement a receiving function. The transceiving module can implement both the sending function and/or the receiving function.

The communication apparatus 1 may be a terminal device, or may be an apparatus in the terminal device, or may be an apparatus that can be used in conjunction with the terminal device. Alternatively, the communication apparatus 1 may be an access network device, or may be an apparatus in the access network device, or may be an apparatus that can be used in conjunction with the access network device.

The communication apparatus 1 is configured at the terminal device side:
The apparatus includes: a processing module 12.

The processing module 12 is configured to obtain network information of at least one optional Standalone Non-Public Network (SNPN); and according to the network information of the optional SNPN and selection policy information, determine a target SNPN which is selected for registration;
wherein the selection policy information includes at least one of:
a first list, wherein the first list includes network identifiers of user controlled first candidate SNPNs, first priority information and first validity conditions corresponding to the network identifiers of the first candidate SNPNs;
a second list, wherein the second list includes network identifiers of credentials holder controlled second candidate SNPNs, second priority information and second validity conditions corresponding to the network identifiers of the second SNPNs;
a third list, wherein the third list includes credentials holder controlled candidate group identities GINs, third priority information and third validity conditions corresponding to the candidate GINs.

In some embodiments, the selection policy information further includes: a last registered SNPN and a corresponding fourth validity condition.

In some embodiments, the first validity condition includes first valid time information and/or first valid location information; or
the second validity condition includes second valid time information and/or second valid location information; or
the third validity condition includes third valid time information and/or third valid location information.

In some embodiments, the fourth validity condition includes fourth valid time information and/or fourth valid location information.

In some embodiments, the apparatus further includes a transceiving module 11 configured to receive indication information sent by an access network device, wherein the indication information is used to indicate the network information of the at least one optional SNPN.

The processing module 12 is further configured to, according to the indication information, obtain the network information of the at least one optional SNPN.

In some embodiments, the network information of the optional SNPN includes at least one of:
a network identifier of the optional SNPN;
a GIN of the optional SNPN.

In some embodiments, the processing module 12 is further configured to: according to the network identifier of the optional SNPN, the network identifiers of the first candidate SNPNs and the first priority information, determine whether the optional SNPN exists in the first list and a corresponding first priority order; according to the first priority order, determine in sequence whether a first validity condition of the optional SNPN existing in the first list is met; and determine a first optional SNPN with a first validity condition which is met as the target SNPN, wherein the first optional SNPN is the optional SNPN existing in the first list.

In some embodiments, the processing module is further configured to: according to the network identifier of the optional SNPN, the network identifiers of the second candidate SNPNs and the second priority information, determine whether the optional SNPN exists in the second list and a corresponding second priority order, wherein a first condition is met, and the first condition includes at least one of the following:
the optional SNPN does not exist in the first list;
none of first validity condition of the optional SNPN existing in the first list is met;
all of the optional SNPN, that exists in the first list and a first validity condition of which is met, fails in registration during a registration procedure;
according to the second priority order, determine in sequence whether a second validity condition of the option SNPN existing in the second list is met; and
determine a second optional SNPN with a second validity condition which is met as the target SNPN, wherein the second optional SNPN is the optional SNPN existing in the second list.

In some embodiments, the processing module is further configured to: according to the GIN of the optional SNPN, the candidate GINs and the third priority information, determine whether the optional SNPN exists in the third list and a corresponding third priority order, wherein a second condition is met, and the second condition includes at least one of the following:
the optional SNPN does not exist in the second list;
none of second validity condition of the optional SNPN existing in the second list is met;
all of the optional SNPN, that exists in the second list and a second validity condition of which is met, fails in registration during a registration procedure;
according to the third priority order, determine in sequence whether a third validity condition of the optional SNPN in the third list is met; and
determine a third optional SNPN with a third validity condition which is met as the target SNPN, wherein the third optional SNPN is the optional SNPN existing in the third list.

In some embodiments, the processing module 12 is further configured to: according to the network identifier of the optional SNPN, the network identifiers of the first candidate SNPNs and the first priority information, determine whether the optional SNPN exists in the first list and a corresponding first priority order;
according to the network identifier of the optional SNPN, the network identifiers of the second candidate SNPNs and the second priority information, determine whether the optional SNPN exists in the second list and a corresponding second priority order;
according to the GIN of the optional SNPN, the candidate GINs and the third priority information, determine whether the optional SNPN exists in the third list and a corresponding third priority order;
according to the first priority order, determine in sequence whether a first validity condition of the optional SNPN existing in the first list is met; and
determine a first optional SNPN with a first validity condition which is met as the target SNPN, wherein the first optional SNPN is the optional SNPN existing in the first list.

In some embodiments, the processing module 12 is further configured to: according to the second priority order, determine in sequence whether a second validity condition of the optional SNPN existing in the second list is met, wherein a first condition is met, and the first condition includes at least one of the following:
the optional SNPN does not exist in the first list;
none of first validity condition of the optional SNPN existing in the first list is met;
all of the optional SNPN, that exists in the first list and a first validity condition of which is met, fails in registration during a registration procedure; and
determine a second optional SNPN with a second validity condition which is met as the target SNPN, wherein the second optional SNPN is the optional SNPN existing in the second list.

In some embodiments, the processing module 12 is further configured to: according to the third priority order, determine in sequence whether a third validity condition of the optional SNPN existing in the third list is met, wherein a second condition is met, and the second condition includes at least one of the following:
the optional SNPN does not exist in the second list;
none of second validity condition of the optional SNPN existing in the second list is met;
all of the optional SNPN, that exists in the second list and a second validity condition of which is met, fails in registration during a registration procedure; and
determine a third optional SNPN with a third validity condition which is met as the target SNPN, wherein the third optional SNPN is the optional SNPN existing in the third list.

In some embodiments, the processing module 12 is further configured to: determine that network selection fails, wherein a third condition is met, and the third condition includes at least one of the following:
the optional SNPN does not exist in the third list;
none of third validity condition of the optional SNPN existing in the third list is met;
all of the optional SNPN, that exists in the third list and a third validity condition of which is met, fails in registration during a registration procedure.

In some embodiments, the selection policy information further includes: a last registered SNPN and a corresponding fourth validity condition; before determining whether the optional SNPN exists in the first list and the corresponding first priority order according to the network identifier of the optional SNPN, the network identifiers of the first candidate SNPNs and the first priority information, the processing module 12 is further configured to: according to the network identifier of the optional SNPN and a network identifier of the last registered SNPN, determine whether there is an optional SNPN that is the same as or equivalent to the last registered SNPN; and determine a fourth optional SNPN with a fourth validity condition which is met as the target SNPN, wherein the fourth optional SNPN is the optional SNPN that is the same as or equivalent to the last registered SNPN.

In some embodiments, the processing module 12 is further configured to: determine to cancel execution of determination of whether the optional SNPN exists in the first list and the corresponding first priority order according to the network identifier of the optional SNPN, the network identifiers of the first candidate SNPNs and the first priority information.

In some embodiments, the processing module 12 is further configured to: determine to execute determination of whether the optional SNPN exists in the first list and the corresponding first priority order according to the network identifier of the optional SNPN, the network identifiers of the first candidate SNPNs and the first priority information, wherein a fourth condition is met, and the fourth condition includes at least one of the following:
there is no optional SNPN that is the same as or equivalent to the last registered SNPN;
a fourth validity condition of the optional SNPN that is the same as or equivalent to the last registered SNPN is not met;
the optional SNPN that is the same as or equivalent to the last registered SNPN fails in registration during a registration procedure.

The communication apparatus 1 is configured at the access network device side:
The apparatus includes a transceiving module 11.

The transceiving module 11 is configured to: send indication information to a terminal device, wherein the indication information is used to indicate network information of at least one optional SNPN, and the indication information is used for the terminal device to obtain the network information of the at least one optional SNPN.

In some embodiments, the network information of the optional SNPN includes at least one of:
a network identifier of the optional SNPN;
a GIN of the optional SNPN.

Regarding the communication apparatus 1 in the above embodiments, the specific manner in which each module performs operations has been described in detail in the embodiments of the methods, and repeated descriptions will be omitted here.

The communication apparatus 1 provided in the above embodiments of the present disclosure can achieve the same or similar beneficial effects as the network selection methods provided in some of the above embodiments, and repeated descriptions will be omitted here.

FIG. 7 is a schematic structural diagram of another communication apparatus 1000 provided by an embodiment of the present disclosure. The communication apparatus 1000 may be a terminal device, or may be an access network device, or may be a chip, chip system or processor and so on that supports the terminal device to implement the above methods, or may be a chip, chip system or processor and so on that supports the access network device to implement the above methods. The communication apparatus 1000 may be used to implement the methods described in above method embodiments. For details, please refer to the descriptions in the above method embodiments.

The communication apparatus 1000 may include one or more processors 1001. The processor 1001 may be a general-purpose processor or a special-purpose processor, etc. For example, it can be a baseband processor or a central processor. The baseband processor may be used to process communication protocols and communication data, and the central processor may be used to control the communication apparatus (such as the access network device, baseband chip, terminal device, terminal device chip, DU or CU, etc.), execute a computer program, and processes data for a computer program.

Optionally, the communication apparatus 1000 may further include one or more memories 1002, on which a computer program 1004 may be stored, and the memory 1002 executes the computer program 1004, so that the communication apparatus 1000 performs the methods described in the above method embodiments. Optionally, data may also be stored in the memory 1002. The communication apparatus 1000 and the memory 1002 may be provided separately or integrated together.

Optionally, the communication apparatus 1000 may further include a transceiver 1005 and an antenna 1006. The transceiver 1005 may be called a transceiving unit, a transceiving device, or a transceiving circuit, etc., and is used to realize transmission and receiving functions. The transceiver 1005 may include a receiver and a transmitter. The receiver may be called a receiving device or a receiving circuit, etc., and is used to realize the receiving function; the transmitter may be called a transmitting device or a transmitting circuit, etc., and is used to realize the transmitting function.

Optionally, the communication apparatus 1000 may further include one or more interface circuits 1007. The interface circuits 1007 are used to receive code instructions and transmit them to the processor 1001. The processor 1001 runs the code instructions to cause the communication apparatus 10000 to perform the methods described in the above method embodiments.

When the communication apparatus 1000 is the terminal device, the processor 1001 is configured to perform the S41 and S42 in FIG. 4.

When the communication apparatus 1000 is the access network device, the transceiver 1005 is configured to perform the S51 in FIG. 5.

In an implementation, a transceiver for implementing receiving and transmitting functions may be included in the processor 1001. For example, the transceiver may be a transceiving circuit, or an interface, or an interface circuit. The transceiving circuit, interface or interface circuit used to implement the receiving and transmitting functions may be separate or integrated together. The above-mentioned transceiving circuit, interface or interface circuit may be used for reading and writing of codes/data, or the above-mentioned transceiving circuit, interface or interface circuit may be used for signal transmission or delivery.

In an implementation, the processor 1001 may store a computer program 1003, and the computer program 1003 is run on the processor 1001, causing the communication apparatus 1000 to perform the methods described in the above method embodiments. The computer program 1003 may be solidified in the processor 1001, in which case the processor 1001 may be implemented in hardware.

In an implementation, the communication apparatus 1000 may include a circuit, and the circuit may implement the functions of sending or receiving or communicating in the foregoing method embodiments. The processor and transceiver described in the present disclosure may be implemented in Integrated Circuit (IC), analog IC, Radio Frequency Integrated Circuit (RFIC), mixed signal IC, Application Specific Integrated Circuit (ASIC), Printed Circuit Board (PCB), electronic device, and so on. The processor and transceiver may also be manufactured using various IC process technologies, such as Complementary Metal Oxide Semiconductor (CMOS), nMetal-Oxide-Semiconductor (NMOS), Positive Channel Metal Oxide Semiconductor (PMOS), Bipolar Junction Transistor (BJT), bipolar CMOS (BiCMOS), silicon germanium (SiGe), gallium arsenide (GaAs), etc.

The communication apparatus described in the above embodiments may be a terminal device or an access network device, but the scope of the communication apparatus described in the present disclosure is not limited thereto. And, the structure of the communication apparatus is not limited by FIG. 13. The communication apparatus may be a stand-alone device or may be part of a larger device. For example, the communication apparatus may be:
(1) an independent integrated circuit (IC), or a chip, or a chip system or subsystem;
(2) a collection of one or more ICs; optionally, the IC collection may further include a storage component configured to store data and computer programs;
(3) ASIC, such as modem;
(4) a module that can be embedded in other device(s);
(5) a receiver, a terminal device, an intelligent terminal device, a cellular phone, a wireless device, a handheld device, a mobile unit, a vehicle-mounted device, an access network device, a cloud device, an artificial intelligence device, etc.;
(6) others, etc.

For a case that the communication apparatus may be a chip or a chip system, referring to FIG. 14, a schematic diagram of a chip provided by an embodiment of the present disclosure is shown.

The chip 1100 includes a processor 1101 and an interface 1103. The number of the processor(s) may be one or more than one, and the number of the interface(s) may be more than one.

For a case that the chip is used to implement the functions of the terminal device in the embodiments of the present disclosure:

The interface 1103 is configured to receive code instructions and transmit them to the processor.

The processor 1101 is configured to run the code instructions to perform the network selection methods as described in a part of the above embodiments.

For a case that the chip is used to implement the functions of the access network device in the embodiments of the present disclosure :

The interface 1103 is configured to receive code instructions and transmit them to the processor.

The processor 1101 is configured to run the code instructions to perform the network selection method as described in a part of the above embodiments.

Optionally, the chip 1100 further includes a memory 1102, which is used to store necessary computer programs and data.

Those skilled in the art can also understand that the various illustrative logical blocks and steps listed in the embodiments of the present disclosure may be implemented by electronic hardware, computer software, or a combination of both. Whether such functionality is implemented in hardware or software depends on the specific application and overall system design requirements. Those skilled in the art can use various methods to implement the described functions for each specific application, but such implementation should not be understood as beyond the scope of protection of the embodiments of the present disclosure.

An embodiment of the present disclosure also provides a network selection system. The system includes a communication apparatus as a terminal device and a communication apparatus as an access network device in the embodiment in FIG. 12, or the system includes a communication apparatus as a terminal device and a communication apparatus as an access network device in the embodiment in FIG. 13.

The present disclosure also provides a readable storage medium on which instructions are stored, and when the instructions are executed by a computer, the functions of any of the above method embodiments are implemented.

The present disclosure also provides a computer program product, which, when executed by a computer, implements the functions of any of the above method embodiments.

The above embodiments may be implemented in whole or in part by software, hardware, firmware, or any combination thereof. When implemented in software, the embodiments may be implemented in whole or in part in the form of a computer program product. The computer program product includes one or more computer programs. When the computer program is loaded and executed on a computer, processes or functions described in accordance with the embodiments of the present disclosure are generated in whole or in part. The computer may be a general-purpose computer, a special-purpose computer, a computer network, or other programmable device. The computer program may be stored in a computer-readable storage medium, or may be transferred from one computer-readable storage medium to another, for example, the computer program may be transferred from a website, computer, server, or data center to another website, computer, server or data center through wired (such as coaxial cable, optical fiber, DSL (Digital Subscriber Line)) or wireless (such as infrared, wireless, microwave, etc.) means. The computer-readable storage medium may be any available medium that can be accessed by a computer or a data storage device such as a server, data center, etc. that contains one or more available media integrated. The available medium may be magnetic medium (for example, floppy disk, hard disk, magnetic tape), optical medium (for example, high-density DVD (Digital Video Disc)), or semiconductor medium (for example, SSD (Solid State Disk)), etc.

Those of ordinary skill in the art can understand that first, second, and other numerical numbers involved in the present disclosure are only for convenience of description and are not used to limit the scope of the embodiments of the disclosure, nor to indicate a sequential order.

The term "at least one" in the present disclosure can also be described as one or more, and the plurality can be two, three, four or more, and the present disclosure is not limited thereto. In the embodiments of the present disclosure, for a kind of technical features, "first", "second", "third", "A", "B", "C" and "D", etc. are used to distinguish technical features in the kind of technical features, and technical features described associated with "first", "second", "third", "A", "B", "C" and "D" are in no particular sequential order or order of size.

Depending on the context, the words "if" and "in a case" as used herein may be interpreted as "when..." or "at the time of..." or "in response to determining..."

The corresponding relationships shown in each table in the present disclosure can be configured or predefined. Value(s) of information in each table is(are) only examples and can be configured as other values, which is not limited by the present disclosure. When configuring a corresponding relationship between information and each parameter, it is not necessarily required to configure all the corresponding relationships shown in each table. For example, in a table in the present disclosure, a corresponding relationship shown in some rows may not be configured. For another example, appropriate modified adjustments can be made based on the above table, such as splitting, merging, etc. Names of parameters shown in titles of the tables may also be other names understandable by a communication apparatus, and values or expressions of parameters may also be other values or expressions understandable by the communication apparatus. When implementing the tables, other data structures can also be used, such as arrays, queues, containers, stacks, linear lists, pointers, linked lists, trees, graphs, structure bodies, classes, heaps, hash tables or lists, and so on.

Predefinition in the present disclosure may be understood as definition, definition in advance, storage, pre-storage, pre-negotiation, pre-configuration, solidification, or pre-burning.

Those of ordinary skill in the art will appreciate that the units and algorithm steps of each example described in conjunction with the embodiments disclosed herein can be implemented with electronic hardware, or a combination of computer software and electronic hardware. Whether these functions are performed in hardware or software depends on the specific application and design constraints of the technical solutions. Skilled artisans may implement the described functions using different methods for each specific application, but such implementations should not be considered to be beyond the scope of the present disclosure.

Those skilled in the art can clearly understand that for the convenience and simplicity of description, the specific working processes of the systems, devices and units described above can be referred to the corresponding processes in the foregoing method embodiments, and will not be described again here.

The above are only example embodiments of the present disclosure, but the protection scope of the present disclosure is not limited thereto. Any person familiar with the technical field can easily think of changes or substitutions within the technical scope disclosed in the present disclosure, and such changes or substitutions fall within the protection scope of the present disclosure. Therefore, the protection scope of the present disclosure should be determined by the appended claims.

## Claims

1. A network selection method, performed by a terminal device, the method comprising:
obtaining network information of at least one optional Standalone Non-Public Network (SNPN); and
according to the network information of the optional SNPN and selection policy information, determining a target SNPN which is selected for registration;
wherein the selection policy information comprises at least one of:
a first list, wherein the first list comprises network identifiers of user controlled first candidate SNPNs, first priority information and first validity conditions corresponding to the network identifiers of the first candidate SNPNs;
a second list, wherein the second list comprises network identifiers of credentials holder controlled second candidate SNPNs, second priority information and second validity conditions corresponding to the network identifiers of the second SNPNs;
a third list, wherein the third list comprises credentials holder controlled candidate group identities GINs, third priority information and third validity conditions corresponding to the candidate GINs.

2. The method according to claim 1, wherein the selection policy information further comprises: a last registered SNPN and a corresponding fourth validity condition.

3. The method according to claim 1 or 2, wherein the first validity condition comprises first valid time information and/or first valid location information; or
wherein the second validity condition comprises second valid time information and/or second valid location information; or
wherein the third validity condition comprises third valid time information and/or third valid location information.

4. The method according to claim 2, wherein the fourth validity condition comprises fourth valid time information and/or fourth valid location information.

5. The method according to any one of claims 1 to 4, wherein obtaining the network information of the at least one optional SNPN comprises:
receiving indication information sent by an access network device, wherein the indication information is used to indicate the network information of the at least one optional SNPN; and
according to the indication information, obtaining the network information of the at least one optional SNPN.

6. The method according to any one of claims 1 to 5, wherein the network information of the optional SNPN comprises at least one of:
a network identifier of the optional SNPN;
a GIN of the optional SNPN.

7. The method according to claim 6, wherein determining the target SNPN which is selected for registration according to the network information of the optional SNPN and the selection policy information comprises:
according to the network identifier of the optional SNPN, the network identifiers of the first candidate SNPNs and the first priority information, determining whether the optional SNPN exists in the first list and a corresponding first priority order;
according to the first priority order, determining in sequence whether a first validity condition of the optional SNPN existing in the first list is met; and
determining a first optional SNPN with a first validity condition which is met as the target SNPN, wherein the first optional SNPN is an optional SNPN existing in the first list.

8. The method according to claim 7, further comprising:
according to the network identifier of the optional SNPN, the network identifiers of the second candidate SNPNs and the second priority information, determining whether the optional SNPN exists in the second list and a corresponding second priority order, wherein a first condition is met, and the first condition comprises at least one of the following:
the optional SNPN does not exist in the first list;
none of first validity condition of the optional SNPN existing in the first list is met;
all of the optional SNPN, that exists in the first list and a first validity condition of which is met, fails in registration during a registration procedure;
according to the second priority order, determining in sequence whether a second validity condition of the option SNPN existing in the second list is met; and
determining a second optional SNPN with a second validity condition which is met as the target SNPN, wherein the second optional SNPN is an optional SNPN existing in the second list.

9. The method according to claim 8, further comprising:
according to the GIN of the optional SNPN, the candidate GINs and the third priority information, determining whether the optional SNPN exists in the third list and a corresponding third priority order, wherein a second condition is met, and the second condition comprises at least one of the following:
the optional SNPN does not exist in the second list;
none of second validity condition of the optional SNPN existing in the second list is met;
all of the optional SNPN, that exists in the second list and a second validity condition of which is met, fails in registration during a registration procedure;
according to the third priority order, determining in sequence whether a third validity condition of the optional SNPN in the third list is met; and
determining a third optional SNPN with a third validity condition which is met as the target SNPN, wherein the third optional SNPN is the optional SNPN existing in the third list.

10. The method according to any one of claims 1 to 6, wherein determining the target SNPN which is selected for registration according to the network information of the optional SNPN and the selection policy information comprises:
according to the network identifier of the optional SNPN, the network identifiers of the first candidate SNPNs and the first priority information, determining whether the optional SNPN exists in the first list and a corresponding first priority order;
according to the network identifier of the optional SNPN, the network identifiers of the second candidate SNPNs and the second priority information, determining whether the optional SNPN exists in the second list and a corresponding second priority order;
according to the GIN of the optional SNPN, the candidate GINs and the third priority information, determining whether the optional SNPN exists in the third list and a corresponding third priority order;
according to the first priority order, determining in sequence whether a first validity condition of the optional SNPN existing in the first list is met; and
determining a first optional SNPN with a first validity condition which is met as the target SNPN, wherein the first optional SNPN is an optional SNPN existing in the first list.

11. The method according to claim 10, further comprising:
according to the second priority order, determining in sequence whether a second validity condition of the optional SNPN existing in the second list is met, wherein a first condition is met, and the first condition includes at least one of the following:
the optional SNPN does not exist in the first list;
none of first validity condition of the optional SNPN existing in the first list is met;
all of the optional SNPN, that exists in the first list and a first validity condition of which is met, fails in registration during a registration procedure; and
determining a second optional SNPN with a second validity condition which is met as the target SNPN, wherein the second optional SNPN is an optional SNPN existing in the second list.

12. The method according to claim 11, further comprising:
according to the third priority order, determining in sequence whether a third validity condition of the optional SNPN existing in the third list is met, wherein a second condition is met, and the second condition comprises at least one of the following:
the optional SNPN does not exist in the second list;
none of second validity condition of the optional SNPN existing in the second list is met;
all of the optional SNPN, that exists in the second list and a second validity condition of which is met, fails in registration during a registration procedure; and
determining a third optional SNPN with a third validity condition which is met as the target SNPN, wherein the third optional SNPN is an optional SNPN existing in the third list.

13. The method according to claim 9 or 12, further comprising:
determining that network selection fails, wherein a third condition is met, and the third condition comprises at least one of the following:
the optional SNPN does not exist in the third list;
none of third validity condition of the optional SNPN existing in the third list is met;
all of the optional SNPN, that exists in the third list and a third validity condition of which is met, fails in registration during a registration procedure.

14. The method according to any one of claims 7 to 13, wherein the selection policy information further comprises: a last registered SNPN and a corresponding fourth validity condition;
wherein, before determining whether the optional SNPN exists in the first list and the corresponding first priority order according to the network identifier of the optional SNPN, the network identifiers of the first candidate SNPNs and the first priority information, the method further comprises:
according to the network identifier of the optional SNPN and a network identifier of the last registered SNPN, determining whether there is an optional SNPN that is the same as or equivalent to the last registered SNPN;
determining a fourth optional SNPN with a fourth validity condition which is met as the target SNPN, wherein the fourth optional SNPN is the optional SNPN that is the same as or equivalent to the last registered SNPN.

15. The method according to claim 14, further comprising:
determining to cancel execution of determination of whether the optional SNPN exists in the first list and the corresponding first priority order according to the network identifier of the optional SNPN, the network identifiers of the first candidate SNPNs and the first priority information.

16. The method according to claim 14, further comprising:
determining to execute determination of whether the optional SNPN exists in the first list and the corresponding first priority order according to the network identifier of the optional SNPN, the network identifiers of the first candidate SNPNs and the first priority information, wherein a fourth condition is met, and the fourth condition comprises at least one of the following:
there is no optional SNPN that is the same as or equivalent to the last registered SNPN;
a fourth validity condition of the optional SNPN that is the same as or equivalent to the last registered SNPN is not met;
the optional SNPN that is the same as or equivalent to the last registered SNPN fails in registration during a registration procedure.

17. A network selection method, performed by an access network device, the method comprising:
sending indication information to a terminal device, wherein the indication information is used to indicate network information of at least one optional SNPN, and the indication information is used for the terminal device to obtain the network information of the at least one optional SNPN.

18. The method according to claim 17, wherein the network information of the optional SNPN comprises at least one of:
a network identifier of the optional SNPN;
a GIN of the optional SNPN.

19. A communication apparatus, comprising:
a processing module configured to obtain network information of at least one optional SNPN;
wherein the processing module is further configured to determine a target SNPN which is selected for registration according to the network information of the optional SNPN and selection policy information;
wherein the selection policy information comprises at least one of:
a first list, wherein the first list comprises network identifiers of user controlled first candidate SNPNs, first priority information and first validity conditions corresponding to the network identifiers of the first candidate SNPNs;
a second list, wherein the second list comprises network identifiers of credentials holder controlled second candidate SNPNs, second priority information, and second validity conditions corresponding to network identifiers of the second SNPNs;
a third list, wherein the third list comprises credentials holder controlled candidate group identities GINs, third priority information and third validity conditions corresponding to the candidate GINs.

20. A communication apparatus, comprising:
a transceiving module configured to send indication information to a terminal device, wherein the indication information is used to indicate network information of at least one optional SNPN, and the indication information is used for the terminal device to obtain the network information of the at least one optional SNPN.

21. A communication apparatus, comprising a processor and a memory, wherein a computer program is stored in the memory, and the processor executes the computer program stored in the memory to cause the apparatus to perform the method according to any one of claims 1 to 16, or the processor executes the computer program stored in the memory to cause the apparatus to perform the method according to claim 17 or 18.

22. A communication apparatus, comprising: a processor and an interface circuit;
wherein the interface circuit is configured to receive code instructions and transmit the code instructions to the processor;
wherein the processor is configured to run the code instructions to perform the method according to any one of claims 1 to 16, or to run the code instructions to perform the method according to claim 17 or 18.

23. A computer-readable storage medium storing instructions, wherein when the instructions are executed, the method according to any one of claims 1 to 16 is implemented, or when the instructions are executed, the method according to claim 17 or 18 is implemented.
